(19) **Europäisches Patentamt**
**European Patent Office**
**Office européen des brevets**

(11) **EP 3 193 464 B1**

(12) **EUROPEAN PATENT SPECIFICATION**

(45) Date of publication and mention
of the grant of the patent:
**12.09.2018 Bulletin 2018/37**

(51) Int Cl.:
***H04B 7/10*** *(2017.01)*

(21) Application number: **17151034.0**

(22) Date of filing: **11.01.2017**

(54) **CIRCUITS AND APPARATUS FOR RADIO BACKHAUL RECEPTION AND TRANSMISSION ON POINT-TO-POINT CONNECTIONS**

SCHALTKREIS UND APPARAT FÜR RADIO BACKHAUL EMPFANG UND SENDEN AUF PUNKT-ZU-PUNKT VERBINDUNGEN

CIRCUIT ET DISPOSITIF POUR RECEPTION ET TRANSMISSION D'UN BACKHAUL RADIO SUR DES CONNECTIONS POINT-A-POINT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2016 IT UB20160327**

(43) Date of publication of application:
**19.07.2017 Bulletin 2017/29**

(73) Proprietor: **SIAE Microelettronica S.p.A.**
**20093 Cologno Monzese (MI) (IT)**

(72) Inventors:
• **BORRA, Roberta**
**20093 Cologno Monzese (MI) (IT)**

• **BUCCHERI, Giovanni**
**20093 Cologno Monzese (MI) (IT)**
• **CUCCHI, Daniele**
**20093 Cologno Monzese (MI) (IT)**
• **SALVANESCHI, Cesare**
**20093 Cologno Monzese (MI) (IT)**

(74) Representative: **Raimondi, Margherita et al**
**Dott. Ing. Prof. Alfredo Raimondi S.r.l.,**
**Piazzale Cadorna, 15**
**20123 Milano (IT)**

(56) References cited:
**EP-A1- 1 708 381        WO-A1-2015/149373**
**WO-A2-2007/057911**

**Description**

The present invention relates to circuits and apparatus for radio relay reception and transmission on point-to-point connections.

Point-to-point radio relays, in particular operating with microwaves, are nowadays widely used in telecommunications networks to perform a backhauling function, namely the connection between the base stations of a network and the higher level network nodes.

The constant increase in the volume of traffic to be transported as a result, for example, of the widespread use of mobile devices and the need to ensure services with a high information content, such as video programs, has resulted in the need to increase the spectral efficiency of the radio apparatus, in particular operating in the frequency ranges between 6 and 42 GHz, which are traditionally reserved for this kind of transmission.

For these purposes, the technique of reuse of the frequency spectrum by means of transmission on orthogonal polarizations, i.e. with discrimination between the transmitted signals provided by the natural degree of cross-polar discrimination (XPD) of the antenna, and the subsequent cross-polar interference cancellation (XPIC) on the receiver side, is nowadays also applied to apparatus which use QAM modulations with a very large number of states (1024, 2048, 4096 and higher). There therefore exists in the technical sector the need for new methods which increase the performance characteristics of interference cancellers operating on the receiver side of point-to-point radio relays which operate with frequency reuse, by means of transmission on two orthogonal polarizations and numerical cross-polar interference cancellation during reception.

In order to allow correct cancellation of the interfering component in the very common case where the main branch and the cross-polar branch of the receiver operate with asynchronous (independent) local oscillators (LO), it is necessary to perform differential carrier recovery (XPIC CARRIER SYNC) designed to resynchronize the two signals received on the two branches of the receiver. This recovery of the differential carrier is currently performed by means of Phase Locked Loops (PLL).

Once the phase synchronism between the two signals received from the two branches has been recovered, cancellation of the cross-polar interfering component from the signal received on the respective branch is performed. Downstream of cancellation main carrier recovery or synchronization is also performed in order to compensate for the residual phase noise accumulated with the main signal on the reception branch.

Following the cross-polar differential carrier recovery, cross-polar interference cancellation and main carrier recovery, a reconstructed transmitted signal is obtained and used as a basis for a decision (estimate) of the original transmitted signal.

WO 2007/057911 describes an apparatus for processing a first signal received on a reception branch associated with a first polarization and a second signal received on a branch associated with a second polarization orthogonal to the first polarization in a system for reception, demodulation and reconstruction of a pair of signals modulated and transmitted isofrequentially and with orthogonal polarization on a radio relay link and comprising pilot symbols in their sequence of modulation symbols. The apparatus comprises:

- a circuit for cancellation of a cross-polar interference component from the first signal received, by means of the signal received on the orthogonal polarization branch, said circuit comprising:

    -- a first phase rotator which imparts a phase rotation to the second signal,
    -- an adder which adds the first signal to the second signal rotated through said phase rotation from the first rotator, obtaining a first signal subject to an attempt at cancellation of the cross-polar interference;

        -- a phase locked loop which outputs said first phase rotation for the first cross-polar interference cancellation attempt;

- a first main carrier synchronization circuit which receives at its input the first signal subject to a cross-polar interference cancellation attempt, applies to it the first phase correction and produces at its output a signal WH reconstructed with precision and first decider error;
- a decider which receives at its input the reconstructed signal and emits a definitive decided signal.

In the known systems, the phase detector of the loop XPIC PLL for recovery of the XPIC carrier is based on a correlation between the signal output by the differential PLL present on the XPIC branch and the error between the received signal and the estimated decided signal downstream of cancellation; this carrier recovery technique is referred to as being "decision directed". When the SNR falls below a certain threshold the main PLL for recovery of the main carrier suffers lock losses due to the decision errors: in order to avoid these lock losses, in the prior art known symbols (pilot symbols) are sent at regular intervals to the receiver; in this way the loss of synchronism of the main PLL should be avoided since, in the presence of the pilot symbols, the receiver has available a definite phase reference which allows "relocking" of the main PLL. This solution, however, introduces a significant delay into the cross-polar interference cancellation loop XPIC PLL, increasing the band thereof and therefore the exposure to noise of varying nature.

Despite these counter-measures there is also the problem that, in systems of this type, the decision errors downstream of the main PLL cause lock losses also on the XPIC PLL; these lock losses cannot be offset with the sending of pilot symbols and result in the impossibility of a correct cancellation of the cross-polar interfering component - which is rotated with respect to the correct phase - and consequently the occurrence of a series (bursts) of undesirable errors with loss of transmitted information. In view of the increasing need to optimize the transmission of signals on radio links, the technical problem which is posed therefore is that of improving the reliability of the frequency reuse reception and transmission systems with transmission on two orthogonal polarizations and cross-polar interference cancellation during reception.

In connection with this problem it is also required in particular to solve or at least partly overcome the problems of the prior art illustrated above and relating to cross-polar differential carrier recovery and/or main carrier recovery.

In connection with these problems it is preferable that the design of the reception system should have a small number of components, be easy and inexpensive to produce and assemble and be able to be easily installed on radio links using normal standardized means.

These results are achieved according to the present invention by a processing apparatus according to Claim 1, a processing method according to Claim 7 and a system according to Claim 6.

Further details of the problems associated with the prior art and the solutions proposed may be obtained from the following description of non-limiting examples of embodiment of the subject of the present invention, provided with reference to the accompanying drawings, in which:

> Figure 1: shows a representation of the channel model of a point-to-point radio relay connection with frequency reuse by means of transmission on orthogonal polarizations;
> Figure 2: shows a block diagram of a system for the radio link communication;
> Figure 3: shows a block diagram of a reception-side processing circuit;
> Figure 4: shows a block diagram of a detail of the main and XPIC synchronization circuitry according to the prior art;
> Figure 5: shows an example of main synchronization which uses pilot symbols;
> Figure 6: shows a block diagram of a main synchronization circuit according to a first example of embodiment of the invention;
> Figure 7: shows an illustration of a reconstructed signal WH, the respective decided symbol AH, the decider error $\varepsilon$H and the amplitude scale of the constellation;
> Figure 8: shows a partial block diagram of a cross-polar interference cancellation circuit according to the invention upstream of further circuitry of a receiver/demodulator apparatus;
> Figure 9: shows a graph illustrating the trend of the mean squared errors for different cancellation attempts in a system according to the invention;
> Figure 10: shows schematic partial views of phase follower loops forming part of main carrier synchronization circuits according to the invention;
> Figure 11: shows a block diagram of a block for selecting the synchronization path according to the invention; and
> Figure 12: shows an overall block diagram of a reception, demodulation and reconstruction system according to the present invention.

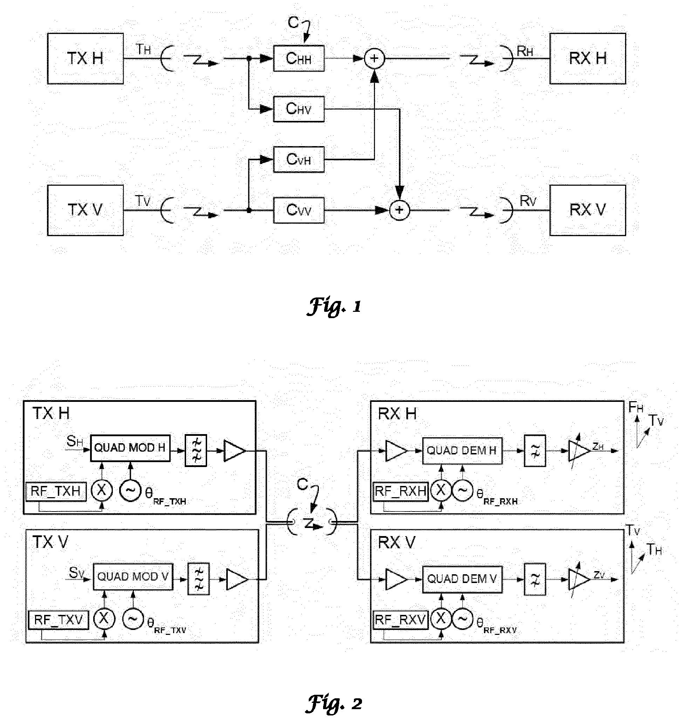

> Figure 1 shows the channel model commonly used to describe propagation on a radio link with cross-polar frequency reuse.

The radio link comprises a branch TX H, RX H associated with a first polarization (H) and a second branch TXV,RXV associated with another polarization (V) orthogonal to the first polarization. Each branch of the connection comprises in turn a transmitter side TX, with respective transmitting apparatus TXH, TXV and a receiver side RX, with respective receiving apparatus RXH, RXV. A propagation channel C is arranged between the transmitter sides and the receiver sides.

The transmitting apparatus TXH and TXV generate two signals $T_H$ and $T_V$, obtained by amplitude and phase modulation of respective radio carriers having the same nominal frequency, with two flows of two-dimensional signal flows belonging to the symbol alphabet of a QAM modulation; these signals $T_H$ and $T_V$ may be represented as sequences of complex numbers which are statistically independent and uncorrelated to each other and without any mutual synchronization bond as regards the frame structure and the symbol or carrier frequency. The modulation used may also not be the same on the two branches V, H.

The two modulated signals are transmitted by means of the antennas of each branch in the same radio channel on two orthogonal polarizations for the sake of simplicity identified as horizontal (H) and vertical (V); the antennas and the transmission medium introduce a coupling between the signals $T_H$ and $T_V$ transmitted on the two polarizations which in the figure is represented by the blocks $C_{HV}$ and $C_{VH}$, i.e. "crosslinked" propagation terms which add to each signal $T_H$ and $T_V$ a portion of the other one. In this arrangement all four coefficients $C_{HH}$, $C_{VV}$, $C_{HV}$ and $C_{VH}$ are complex numbers and therefore each of them has an effect both on the amplitude and on the phase of the signals $T_H$ and $T_V$ transmitted; these coefficients have a static portion, due to the imperfect decoupling (XPD) between the polarizations obtainable with the antennas (the typical values guaranteed range between 30 and 40 dB), and a variable portion, depending on the atmospheric conditions which may induce both attenuation and depolarization effects on the transmitted signals $T_H$ and $T_V$. The signals $R_H$ and $R_V$ which reach the receivers following propagation in the transmission medium are therefore affected by a mutual interference and comprise a respective useful component $T_H,T_V$ to which a cross-polar interfering component $T_V,T_H$ is added. For modulations with a high number of states merely the static portion of the pairing is already sufficient not to ensure operation of the section without a suitable cancellation of the interference upon reception.

With reference to Figure 2, in a general example of a radio relay system, the two transmitters TX H and TX V comprise a respective modulator which modulates a respective carrier RF_TXV,RF_TXH generated by an associated local oscillator (LO). Similarly, on the reception side, the receiving apparatus RXV,RXH comprise respective demodulators which convert and demodulate the signals received at RF (microwaves) into lower frequencies with the respective oscillators RF_RXV;RF_RXH.

$\theta_{RF\_TXV}$; $\theta_{RF\_TXH}$ and $\theta_{RF\_RXV}$; $\theta_{RF\_RXH}$ indicate respectively the instantaneous deviations (jitter) of the phase of these local oscillators from the nominal value, whereby these may be an expression of phase noise or lack of frequency precision.

As described above, each signal received $Z_H,Z_V$ contains two components: a useful component coming from the corresponding transmitter and an interfering component, attenuated by XPD, due to the non-total discrimination between the two polarizations.

The cross-polar interference cancellation process therefore requires that during reception there is instant phase consistency between the interference component $T_H$ of the signal $Z_V$ received and demodulated on the vertical polarization branch and the corresponding component $T_H$ of the signal $Z_H$ received and demodulated on the horizontal branch, said components having the same origin (the transmitter H), but having passed through the two different radio receivers RX H, RX V and therefore having accumulated a phase difference equal to $(\theta_{RF\_RXV}-\theta_{RF\_RXH})$. This phase difference, the dominant component of which is the phase noise of the RF oscillators, must be eliminated by a special synchronization system (XPIC carrier synchronization), on the efficiency of which the performance characteristics of the cross-polar interference cancellation depend.

In the case also where the two transmitter-receivers are incorporated in a single physical unit, there will be two oscillators frequency linked to a same reference point, but in any case having independent and uncorrelated phase noises, since the solution of having a single local oscillator RF would be difficult to realize.

## DEMODULATOR WITH XPIC

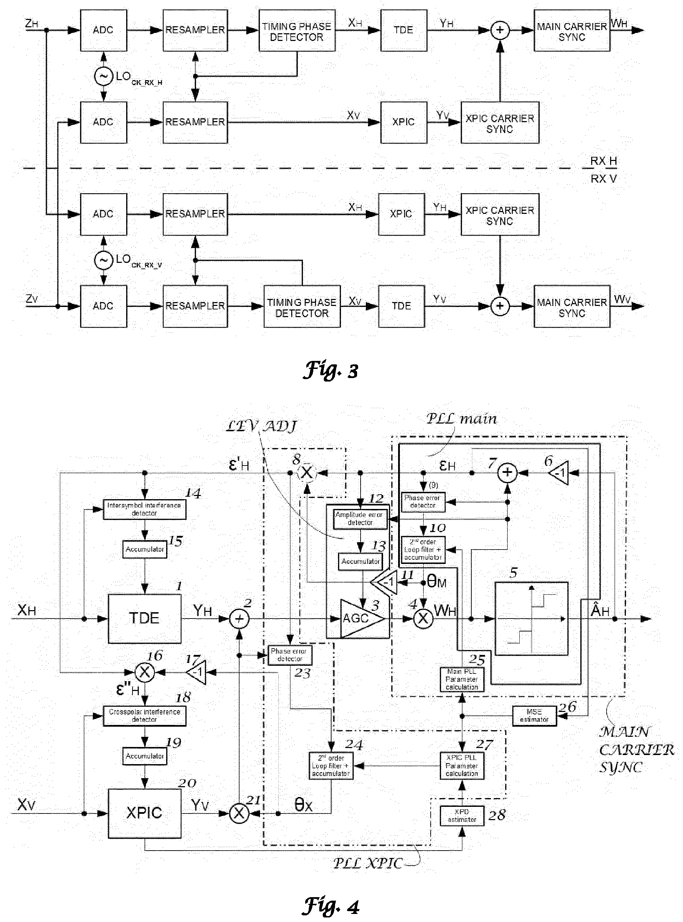

With reference to Figure 3, the signal $X_H$ received on the branch H and the signal $X_V$ received on the orthogonal polarization branch have been exchanged between the two receivers and resampled so as to obtain samples relating to the same time instants (reference is made to the branch associated with horizontal polarization H, a mirror process occurring on the branch V).

The signal $X_H$ received on the branch associated with the horizontal polarization H and the signal $X_V$ coming from the branch with orthogonal polarization V enter respectively into a transverse equalizer filter (TDE, Time Domain Equalizer) and into an XPIC filter, which are two digital filters with adaptive coefficients normally of the same length; the first filter has the task of removing from the desired signal the intersymbol interference caused by the linear distortion introduced by the transmission means, while the second filter must process the signal $X_V$ coming from the cross-polar branch for producing a signal $Y_V$ which ideally should be an amplitude replication of the cross-polar interfering component contained in the signal received on the horizontal polarization branch $Y_H$.

With reference to Fig. 3, a MAIN CARRIER SYNC circuit is schematically shown downstream of the TDE filter, and an XPIC CARRIER SYNC circuit is shown downstream of the XPIC filter. The MAIN CARRIER SYNC circuit must compensate the deviations from the nominal frequency and phase of all the local oscillators present on the branch associated with the polarization of the desired useful signal; it should therefore impose on the reconstructed signal an instantaneous phase rotation which, on the branch associated with the horizontal polarization H, is equal to the inverse of the sum $(\theta_{RF\_TXH}+\theta_{RF\_RXH})$ (Figure 3).

The carrier synchronization XPIC has instead the task of rotating the signal $Y_V$ so as to keep the component $T_V$ contained therein exactly in counter-phase with respect to the corresponding interfering component $T_V$ of the component $Y_H$ received on the horizontal polarization branch, compensating for the instantaneous phase difference between the reception LOs of the two radio terminals of the two reception branches; it should therefore ideally impart an instantaneous rotation equal to

the sum $(\theta_{RF\_RXH}-\theta_{RF\_RXV}+\pi)$.

**XPIC AND MAIN CARRIER SYNCHRONIZATION WITH A PLL**

Figure 4 shows in greater detail the general structure of a main carrier and XPIC equalizer/canceller/synchronizer system.

The signal $X_H$ coming from the horizontal branch enters into the transverse equalizer filter 1, while the signal $X_V$ coming from the vertical branch enters into the XPIC cancellation filter 20. The respective outputs of the two filters are a signal $Y_H$ received and demodulated on the horizontal branch and without the associated intersymbol interference, but still affected by a cross-polar interference component $T_V$, and a signal $Y_V$ from the vertical branch which comprises a component $T_V$ which replicates the amplitude of the cross-polar interfering component $T_V$ of the signal $Y_H$.

$Y_V$ is input to a phase rotator block 21 which imparts a phase correction through an angle $\theta X$ which ideally should be such that the signal output from the rotator comprises a component equal to the cross-polar interference component $T_V$ contained in $Y_H$ and exactly in counter-phase with respect to the latter.

These signals are input to an adder node 2 for cancellation of the cross-polar interference.

At the output of the adder node 2 there is therefore a reconstructed signal of the transmitted signal $T_H$, free also from the cross-polar interference; this enters into an automatic level (amplitude) correction AGC block 3 and then into a phase rotator 4 which performs the main carrier synchronization, applying an angular correction $\theta M$ designed to eliminate all the rotations imparted to the signal as a result of the lack of precision of the local oscillators on the branch associated with the respective polarization.

This therefore results in the reconstructed signal WH which is a sequence of digital values ideally identical to the sequence of QAM symbols transmitted AH by the transmitting apparatus TXH.

The signal WH is sent to a decider 5 which reconstitutes at its output a sequence ÂH of decided QAM constellation symbols which are closer to the respective values of WH.

If the reception and reconstruction were correct ÂH would be equal to AH, but the presence of disturbances superimposed on the reconstructed signal WH (additional noise, distortion, phase noise, residual interference) is such that there are decision errors (instants where ÂH≠AH) and, even in the case of a correct decision (ÂH=AH), the difference between the symbols received and reconstructed symbols WH and the decided symbols ÂH, referred to as 'decider error' $\varepsilon H$ and calculated by a subtractor node 6,7, is not generally zero.

In order to prevent these disturbances which determine decision errors, the prior art uses a feedback control loop (PLL MAIN) of the main synchronization circuit and a feedback control loop (XPIC PLL) of the XPIC synchronization circuit, as well as a LEV ADJ circuit for correcting the amplitude level and any further feedbacks able to adjust adaptively the TDE and XPIC filters. These loops and any further circuits are activated by gain, phase and interference detectors depending on the correlation between the decider error $\varepsilon H$ and the reconstructed signal which is at the origin thereof.

In greater detail and with reference to Fig. 4, it can be seen that:

- The main control loop PLL MAIN for controlling phase synchronization of the main carrier comprises:

  ∘ -- a phase error detector 9 which calculates the imaginary part of the complex product between the decider error $\varepsilon H$ and the conjugate of the reconstructed signal WH;
  ∘ -- a loop filter and a following accumulator 10 which receive at their input the phase error calculated by the detector 9 and produce at their output an instantaneous main phase correction $\theta M$ for main carrier synchronization performed by the said rotator 4;

- the LEV ADJ circuit for controlling the level of the reconstructed signal from which the cross-polar interference has been eliminated comprises:

  ∘ -- an amplitude error detector 12 which calculates the real part of the complex product between the decider error $\varepsilon H$ and the conjugate of the reconstructed signal WH;
  ∘ -- preferably a simple accumulator 13 which receives at its input said amplitude error emitted by the detector 12 and produces at the output an instantaneous amplitude correction which controls an automatic gain correction block 3 (in this case therefore a 1st order loop is therefore used);

- the XPIC PLL for controlling the cross-polar phase synchronization comprises:

  ∘ -- a phase error detector 23 which receives at its input a counter-rotated decider error $\varepsilon'H$ obtained by counter-rotating the error $\varepsilon H$ with the inverse of $\theta M$ by means of the blocks 11 and 8. This is advantageous for recovering the phase coherence with the signal XH since $\varepsilon H$ has passed through the main phase correction $\theta M$;

○ -- The phase error detector 23 calculates an estimated phase error of the cross-polar interference cancellation performed with the signal $Y_V$; the estimate is provided by the imaginary part of the complex product between the counter-rotated error and the conjugate complex signal of $Y_V$;

○ -- in series with the detector 23 there is a filter which filters the estimated calculated error and a following accumulator 24; at the output of the accumulator there is an instantaneous phase correction $\theta X$ to be applied to the signal $Y_V$ coming from the vertical polarization branch;

• The counter-rotated error $\varepsilon'H$, in which owing to the counter-rotation any residual intersymbol interference which has not been cancelled is in phase with $X_H$ is moreover preferably used to update the coefficients of the transverse equalizer TDE 1 with an updating circuit of the TDE which comprises:

○ -- a residual intersymbol interference detection block 14 which correlates the counter-rotated decider error $\varepsilon'H$ with the samples of the signal $X_H$ received at the input of the equalizer TDE taken in the sampling instants immediately preceding and following the symbol on which the error $\varepsilon'H$ was calculated;

○ -- a set of accumulators 15 which receives at its input the correlations obtained in the block 14 and produces at its output the coefficients of the equalizer TDE.

• Finally the coefficients of the interference cancellation filter 20 are updated by correlating the decider error and the samples of the signal $X_V$ input to the canceller taken in instants immediately preceding and following the symbol on which the error was calculated. The correlations are accumulated in an accumulator block 19 from where the adaptive coefficients for the XPIC filter 20 are obtained. In order to obtain the phase coherence in the correlation, the error $\varepsilon'H$ is rotated by the inverse of $\theta X$ in the blocks 16 and 17: thus $\varepsilon''H$ is obtained where any residual cross-polar interference which has not been cancelled is in phase with $X_V$.

The decider error $\varepsilon H$ is therefore used to obtain estimates of the different parameters which must be kept under control; in the real practical application the instantaneous values of these estimates are falsified both because the various disturbances may "interact" with each other (for example an intersymbol interference may produce an error which on an instantaneous level is similar to that caused by a phase or amplitude error) and because the decider error contains a thermal noise term uncorrelated with the disturbances which are to be estimated and because too large a disturbance results in the wrong decision and consequently causes the decider error (calculated in relation to a wrong symbol) to lose the correlation with the disturbance which it caused.

One problem of the detectors of the prior art based on the use of the decider error (known as "decision directed" detectors) is associated with the fact that these detectors produce correct estimates only if averaged over a time interval long enough to attenuate the instantaneous errors and only if the effect of the disturbances is small enough not to produce an excessive number of decider errors. They are therefore suitable if the disturbances to be estimated vary slowly over time, as in the case of the level of the intersymbol interference and also of the cross-polar interference in respect of the amplitude only; control of these parameters is generally performed by means of narrow-band 1st order loops. The problem becomes evident more fully in the case of both main and XPIC carrier phase synchronizations which must respond to fast disturbances such as:

▪ static frequency errors of the LO, so that the control loops must be of the 2nd order so as not to introduce static phase errors;
▪ phase noise of the LOs which may not be regarded as "narrow band" compared to the symbol frequency at which the detectors operate;

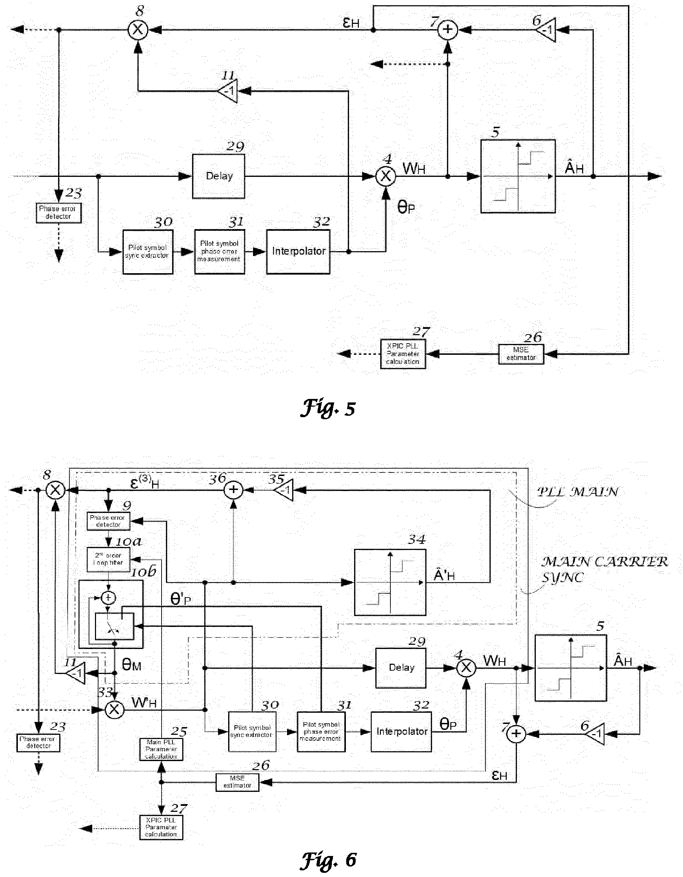

instantaneous frequency jumps of the LOs caused by mechanical instability of the components induced by temperature transients. Remedies to the situation described which form the loops guiding the relatively wide-band XPIC and main phase synchronization circuits are already known, but this exposes them to the risk of being "destabilized" by thermal noise and decision errors. It is also known that measures such as narrowing the loop band when the thermal noise level becomes high may be used: this is represented in Figure 6 by the blocks 25 and 27 which provide the loop filters with suitable (proportional and integral) coefficients which vary depending on the mean squared error (MSE) calculated in a respective block 26 by means of accumulation over a sufficiently long period of time of the squared decision error.

In the case of XPIC synchronization it is known that the coefficients of the loop filter may be modified also depending on the estimate of the decoupling between the two polarizations (XPD, Cross-Polar Decoupling) obtained by measuring in a block 28 the amplitude of the coefficients of the canceller; the aim of this measurement is to compensate for the fact that the gain of the decision-directed phase detector increases with an increase of the interference (and therefore with a decrease of the XPD).

However, when the number of modulation states becomes very high (from 256QAM upwards) the decision-directed phase detectors of the prior art are no longer sufficient to ensure correct synchronization in all the required operating conditions, since a divergence of 1-2 degrees from the ideal phase is sufficient to cause a quantity of decider errors such as to render insignificant the output of the detectors, "opening the loop" and resulting in a phase and frequency lock loss.

In the case of main synchronization the problem is solved by inserting in the sequence of QAM information symbols a number of symbols which are known a priori to the receiver and therefore immune from errors in the decision, called "pilot symbols". These are inserted with a fixed frequency which may vary depending on the magnitude of the phase deviations to be tracked - but which is normally comprised between 1/20th and 1/100th of the symbol frequency - and generally form part of a high-energy 4QAM sub-constellation so as to highlight the effect of the phase deviations (namely a rotation of the entire constellation about the origin of the axes) compared to the effect produced by the other disturbances, first and foremost the thermal noise.

Owing to the presence of the pilot symbols it is possible to obtain, at periodic intervals, an estimate of the phase deviation which is much more precise than that which can be obtained with the decision-directed detector. If the frequency of the pilot symbols is high enough compared to the phase noise band the samples of this estimate allow reconstruction of the progression of the deviation in all the intermediate instants by means of an interpolation filter, according to the diagram shown in Figure 5:

the phase rotator 4 of the main synchronization now imparts a correction $\theta P$ obtained by extracting the pilot symbols 30, the position of which can be recognized also upstream of the carrier synchronization, calculating 31 the deviation thereof from the ideal phase and interpolating 32 the samples thus obtained. The delay 29 serves to align the sequence of symbols with the phase correction thus compensating for the interpolation delay.

From the point of view of XPIC phase synchronization, the use of pilot symbols does not, however, offer advantages since it does not provide any information about the phase of the cross-polar interference; in this connection the pilot symbols are not more useful than the other symbols, since it would be required to ensure synchronicity of the flows on the two polarizations in order to ensure that a pilot symbol from the branch H is always interfered by a pilot symbol from the branch V; this however constitutes a heavy system constraint which in practice is not feasible.

The arrangement which makes use of the interpolation on the pilot symbols also introduces a major delay between the XPIC phase correction actuator (the rotator 21 in Fig. 4) and the decider 5 downstream of which the phase error is calculated 23. This delay is therefore within the feedback loop XPIC PLL and imposes on the latter a limitation of the loop band in order to maintain the stability, penalizing further the capacity thereof to respond to fast events.

## MAIN CARRIER SYNCHRONIZATION WITH A PLL ACCORDING TO THE INVENTION

Figure 6 shows a first example of embodiment of a MAIN CARRIER SYNC circuit according to the present invention which provides a solution to this problem.

The circuit uses pilot symbols and comprises:

- a first rough main phase synchronization, during which a phase correction angle $\theta M$, obtained by means of loop PLL MAIN for controlling the main carrier synchronization 34,35,36,9,10a,10b is applied by a rotator 33 to the incoming signal YH so as to obtain a first roughly reconstructed signal W'H;
- the roughly reconstructed signal W'H is input to a circuit 29,4 for refined main synchronization performed by applying phase corrections $\theta P$ obtained by means of blocks for extraction 30, measurement 31 and interpolation 32 of the phase corrections of the pilot symbols in a manner similar that illustrated with reference to Fig. 5;
- the roughly reconstructed signal W'H is also input to said PLL MAIN loop which comprises:

    -- a decider 34 which produces a decided symbol A'H, i.e. attempt at estimating the transmitted signal AH;
    -- a subtractor 36,36 which compares the roughly reconstructed signal W'H and the decided symbol Â'H, providing at its output a decider 34 error $\varepsilon^{(3)}H$;
    -- a phase detector 9 which correlates the decider error $\varepsilon^{(3)}H$ with the roughly reconstructed signal W'H, providing at its output a phase error;
    -- a loop filter 10a which receives at its input the phase error thus calculated;
    -- a successive accumulator 10b of the filtered phase error, said accumulator 10b further comprising a switch which, when a synchronism indicating a pilot symbol extracted from the block 30 occurs, replaces the output of the accumulator, namely the instantaneous phase correction calculated by the PLL MAIN loop on the decider 34 error, with a phase (error) correction $\theta'P$ measured on the pilot symbol received in the respective block 31 of the MAIN CARRIER SYNC CIRCUIT.

This measure allows the duration of the lock losses of the loop PLL MAIN caused by noise peaks or series (bursts) of incorrect decisions to be reduced to a minimum, since upon arrival of a pilot symbol, the synchronism of which is recovered by the block 30, the phase correction of the loop PLL MAIN is always overwritten by the phase correction calculated on the pilot symbol received by means of the block 31, which is certainly precise.

At the same time, when the loop PLL MAIN remains correctly locked, i.e. for most of the time, it ensures fast control of the main phase in the intervals between one pilot symbol and another one.

It is therefore clear how the circuit according to the invention provides control of the main synchronism which is virtually immune to lock losses and devoid of interpolation delay which is external to the loop PLL MAIN.

As will become clearer below, this further allows the implementation of reception, demodulation and reconstruction systems with cross-polar interference cancellation in which the cross-polar synchronization control loop XPIC is kept "short" and therefore with a wide band.

The problem of use of the pilot symbols in the prior art is in fact the introduction of a significant delay in the cancellation loop XPIC. The solution according to the invention is intended also to solve this problem.

It is therefore clear how this first embodiment solves the problem of lock losses of the main synchronizer. However it does not prevent the occurrence of lock losses of the XPIC synchronization when there is thermal noise and the need to narrow the loop band of the XPIC PLL in order to avoid this, thus not managing to ensure sufficient immunity of the system in respect of the phase noise and frequency jumps of the LOs.

A reconstruction system with a three-path mechanism according to the invention described below solves these further problems.

## THREE-PATH MECHANISM

The effect of a lock loss of the XPIC phase synchronization is a temporary increase in the residual cross-polar interference. In theory, the XPIC interference cancellation filter 20 should react compensating for the phase deviation with its coefficients or should tend to zero them in the event of the residual interference causing a number of decision errors such that there is no longer correlation between decider error and interfering signal; updating of the XPIC cancellation filter is however slow compared to the duration of these events so that it may be assumed that, in the short term, its output signal indicated with $Y_V$ in the various diagrams does not have either phase variations or phase variations except for those associated with the QAM modulation.

In the correct convergence state, the signal $Y_V$ at the output of the XPIC cancellation filter has the same energy as the cross-polar interference superimposed on $Y_H$, which is in turn equal to that of the desired useful signal $T_H$ divided by the factor of decoupling between the polarizations (XPD).

The XPIC phase synchronization circuit should align (by means of a rotation) $Y_V$ so that the component $T_V$ contained in it is in counter-phase with the interfering component $T_V$ of $Y_H$, cancelling it out, but if there is a phase error $\varphi$ with respect to the optimum alignment there is a residual cross-polar interference defined by

$$\rho = Y_V \cdot [e^{(j \cdot \varphi)} - 1]$$

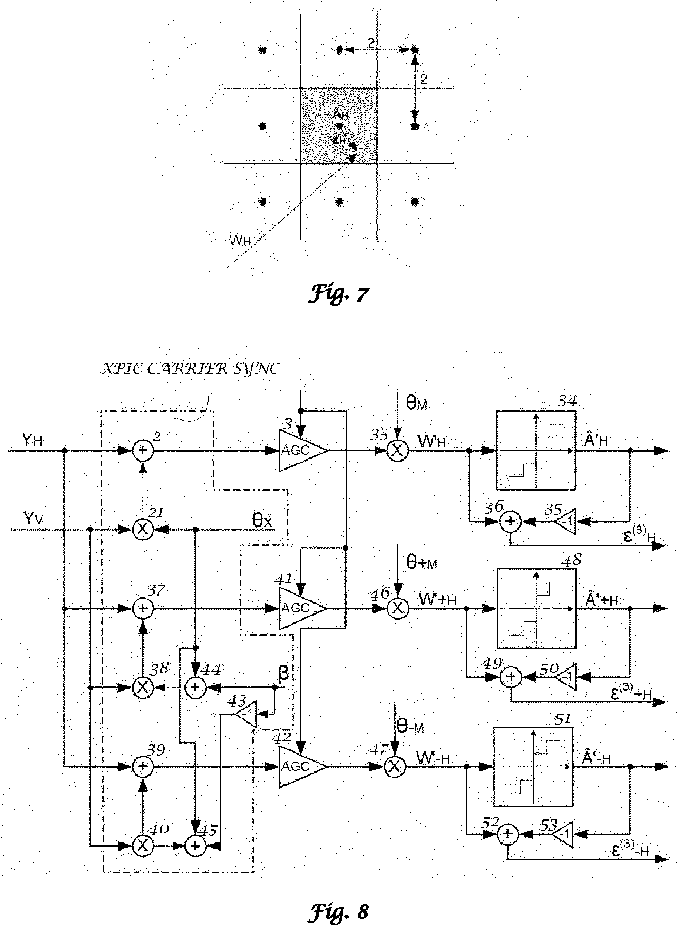

In order to express the mean squared decider error induced by this residual interference, a representation of the QAM constellation shown in Figure 7 may be used, where the distance between two adjacent symbols is set to 2 and therefore the value 1 corresponds to the distance between a symbol and the threshold beyond which a decider 34 decision error is committed.

In this representation the decider error which can be measured on each of the coordinates of the Cartesian plane in which the constellation is represented is equal to $\pm 1$ (if the real error exceeds 1 in terms of absolute value there is an incorrect decision, and the measured error will be related to the symbol closest to that transmitted, being in any case less than 1).

The instantaneous squared error (sum of the squares of the errors on the single coordinates) on this scale is equivalent to 2 at the most; from the point of view of the mean squared error it is possible to regard as a measurable "end-of-scale" value the condition in which the received and reconstructed signal WH may be with the same probability at any point of the decision square which surrounds the decided symbol AH. This value is equal to

$$\text{MSE}_{\text{MAX}} = \frac{2 \cdot \int_{-1}^{1} (x^2) dx}{2} = \frac{2}{3}$$

If PH denotes the energy of the desired signal (sum of the squares of the coordinates of the symbols averaged over the entire constellation) the energy of the residual cross-polar interference is equal to:

$$MSE_X = \frac{P_H}{XPD} \cdot |(e^{(j \cdot \varphi)} - 1)|^2 = \frac{P_H}{XPD} \cdot 2 \cdot [1 - \cos(\varphi)]$$

In a first approximation for a small value of $\varphi$ the following is obtained:

$$MSE_X = \frac{P_H}{XPD} \cdot \varphi^2$$

With $\varphi$ expressed in radians.

For a squared constellation with M states (M = $2^n$ with n being even) the following is applicable:

$$P_H = \frac{2 \cdot (M - 1)}{3}$$

This mean squared error is added in terms of power to that originating from other disturbances (AGWN, distortions) not correlated to the cross-polar interference, which forms a "floor MSE" $MSE_{FLOOR}$. The sum of all these factors tends to saturate at the value $MSE_{MAX}$.

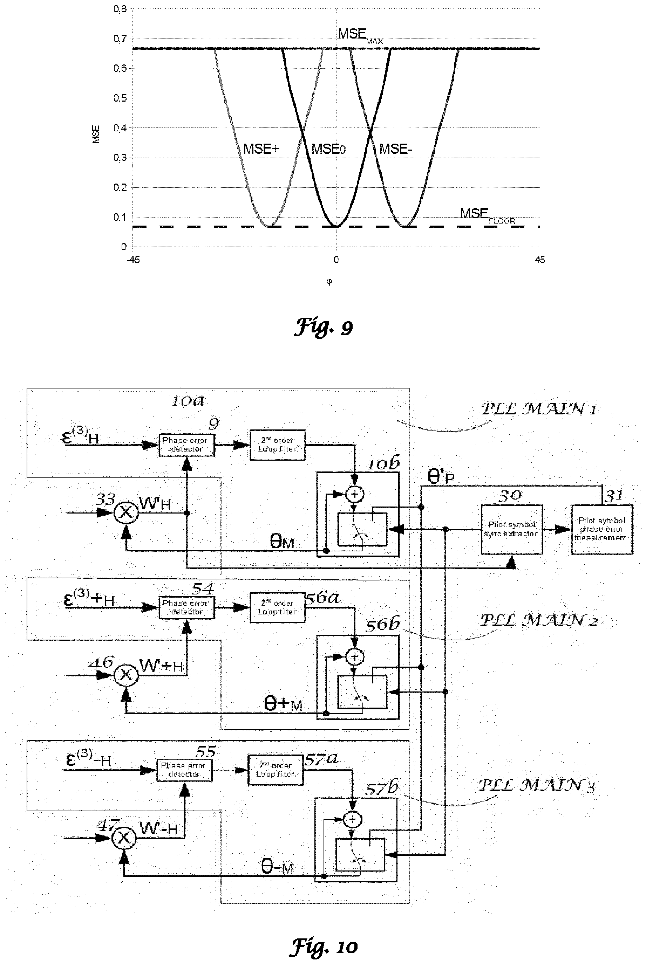

The trend of the MSE upon variation of $\varphi$ is therefore a curve which starts from $MSE_{FLOOR}$ and tends to increase up to $MSE_{MAX}$, as shown in Figure 9, central curve; the slope of the curve depends on the values of XPD and $MSE_{FLOOR}$.

The XPIC synchronization loop remains stable for as long as the phase error remains within a narrow band about zero, otherwise the decision errors tend to cause a sudden decrease in the gain of the phase detector, opening the loop; at this point the phase correction for cross-polar interference cancellation is out of control and may remain so for a long period of time since only random movements may cause it to return within the locking zone. There exists therefore a series of symbol decision errors during demodulation, reconstruction and estimation.

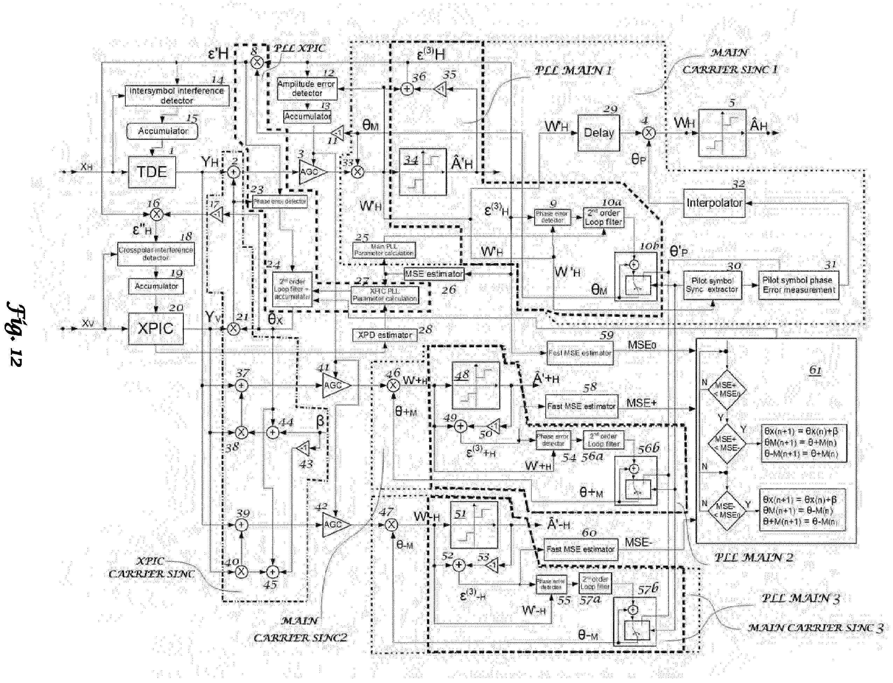

In order to reduce to a minimum the frequency and duration of these error bursts and with reference to Fig. 12, which shows an embodiment of a demodulation and reconstruction system according to the invention comprising an XPIC CARRIER SYNC circuit for cancellation of cross-polar interference from the signal $Y_H$ received on the horizontal-polarization branch by means of the signal $Y_V$, and to Figs. 10, 12 and 13 which illustrate details of the said system, the XPIC CARRIER SYNC circuit comprises:

-- a first phase rotator 21 which imparts a phase rotation $\theta X$ to the signal $Y_V$ coming from the vertical-polarization branch,
-- a first adder 2 which adds the signal $Y_H$ received and demodulated on the horizontal-demodulation branch with the signal $Y_V$ rotated by $\theta X$ from the first rotator 21, obtaining a first signal which is subject to a cross-polar interference cancellation attempt and which is input to an AGC 3 which is included in a LEV ADJ circuit for amplitude normalization of the signal attempting reconstruction;
-- a second phase rotator 38 which imparts a phase rotation $\theta X + \beta$ to the signal $Y_V$ coming from the vertical-polarization branch,
-- a second adder 37 which adds the signal $Y_H$ received and demodulated on the horizontal-polarization branch with the signal $Y_V$ rotated by $\theta X + \beta$ from the second rotator 38, obtaining a second signal which is subject to a cross-polar interference cancellation attempt and which is input to a respective AGC 41 for normalization of the amplitude level of the signal;
-- a third phase rotator 40 which imparts a phase rotation $\theta X + \beta$ to the signal $Y_V$ coming from the vertical-polarization branch,
-- a third adder 39 which adds the signal YH received and demodulated on the horizontal-polarization branch with the signal $Y_V$ rotated by $\theta X + \beta$ from the third rotator 40, obtaining a third signal which is subject to a cross-polar interference cancellation attempt and which is input to a respective AGC 42 for correction of the amplitude level;

wherein:

- the value $\theta X$ of the phase rotation is obtained buy means of an XPIC PLL similar to that already described in Fig. 4; and
- $\beta$ is an additional phase rotation suitably chosen for example depending on XPD, $MSE_{FLOOR}$ and modulation during use; preferred criteria for choosing the parameter $\beta$ will be described in greater detail below.

The signal from the first adder 2, which is subject to a first cancellation attempt and normalized, is then input to a MAIN CARRIER SYNC circuit according to the invention which is similar to that described with reference to Fig. 6 and which comprises a first rotator 33 which applies a first phase correction θM - obtained with a loop PLL MAIN 1 similar to that described with reference to the embodiment in Fig. 6 - for main carrier synchronization, obtaining at the output a first roughly reconstructed signal attempt W'H.

In a similar manner to that illustrated for Fig. 6, the first reconstructed signal attempt W'H is then input:

- to a circuit 29,4,32 for refined main synchronization performed by applying phase corrections θP obtained by means of interpolation 32 carried on the phase corrections of the pilot symbols extracted 30 and measured 31, obtaining a reconstructed signal WH which, output from the MAIN CARRIER SYNC 1 circuit, is input to a decider 5 which emits a definitive decided signal ÂH.
- to a first decider 34, at the output of which a signal A'H, i.e. first attempt at estimating the transmitted signal $T_H$ on the horizontal-polarization branch, is obtained; on the basis of the signal A'H, i.e. first estimation attempt, and the signal W'H, i.e. first reconstruction attempt, a first decider error $\varepsilon^{(3)}$H is calculated by means of a subtractor 35,36.

At the output (Figs. 10, 14) of the second and third adder 37, 39 there are present a second MAIN CARRIER SYNC2 circuit and a third MAIN CARRIER SYNC3 circuit comprising respective rotators 46,47 which apply a respective second and third phase rotation θ+M,θ-M and respective similar decider blocks, at the output of which a second and third estimation attempt signal A'+H,A'-H for the transmitted signal $T_H$ are obtained.

On the basis of the second and third estimation attempt signals A'+H,A'-H and the respective second and third roughly reconstructed signals W'+H,W'-H respective second and third decider errors $\varepsilon^{(3)}$+H and $\varepsilon^{(3)}$-H are then calculated by means of a respective subtractor 49,50; 52,53.

As shown in Figure 10, the three decider errors calculated $\varepsilon(3)$, $\varepsilon(3)$+H and $\varepsilon(3)$-H control operation of respective loops PLL MAIN1, PLL MAIN2, PLL MAIN3 for controlling the phase correction for main carrier synchronization (similar to the loop PLL MAIN shown in Fig. 6 and shown only partially in Fig. 10) of the respective first, second and third main synchronization circuits, wherein, upon reception and extraction of a pilot symbol, the instantaneous phase correction θM,θ+M,θ-M output to the respective accumulators 10b,56b,57b of the three loops is replaced with a phase correction θ'P measured on the pilot symbol.

With reference again to Figure 9, in correct locking conditions of the XPIC PLL for controlling the cross-polar interference cancellation circuit, the difference φ between the phase correction θX calculated by means of the XPIC PLL and the optimum (ideal) phase correction is smaller than the discrimination angle β, so that a mean squared error (i.e. MSE) $MSE_0$ calculated on the first decider error $\varepsilon^{(3)}$H is less than the MSE+ for the second decider error $\varepsilon^{(3)}$+H and the MSE- for the third decider error $\varepsilon^{(3)}$-H.

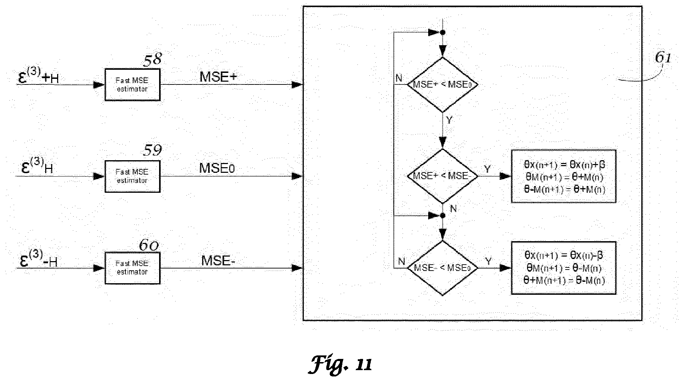

With continuous reference to the overall system in Fig. 12, Figure 11 shows the block diagram of a preferred embodiment of a controller which controls the choice of the first phase rotation θX to be imparted to the signal $Y_V$ from the vertical-polarization branch by means of the first rotator 21 and therefore the choice of the best phase path from among θX, θX+β and θX-β.

As explained more fully below, on the basis of the choice performed by the controller for the phase θX the main phase θM of the three loops PLL MAIN 1,2,3 is also varied.

The controller comprises:

- three blocks 58,59,60 for calculating a mean squared error $MSE_0$, MSE+,MSE- calculated respectively on the first, second and third decider errors $\theta^{(3)}$H, $\varepsilon^{(3)}$+H and $\varepsilon^{(3)}$-H calculated downstream of the respective decision attempts 34,48,51;
- a selector 61 which comprises a fast MSE comparator designed to compare the calculated MSEs and emit a selection of the phase correction θX(n+1) to be output to the XPIC PLL and to be used in the first (central) attempt 21,2 at cross-polar interference cancellation.

As shown in Figs. 13,14, when the selector 61 imparts a change of path, namely a variation of the first phase rotation θX output to the XPIC PLL which is then used to implement the first (or central) attempt at cross-polar interference cancellation, said variation causes automatically a variation of the second and third phase correction θX+β,θX-β of the respective second and third, lateral, interference cancellation circuits XPIC.

In cascade with this variation preset by the controller 61 for realignment of the XPIC carrier synchronization, the three loops PLL MAIN 1,2,3 of the main carrier synchronization circuits are all linked back to the main phase correction θM calculated on the new central path.

With this configuration and with reference to Figure 9 which shows the three MSE which, as a function of φ, move along three similar curves, shifted relative to each other at angle equal to β, it can be seen that, when the phase correction error φ moves from zero, $MSE_0$ increases and MSE+ or MSE-decreases, depending on the direction in which cui φ is moving; when the absolute value of φ reaches β/2 $MSE_0$ is no longer the best from among the three MSEs.

According to an advantageous aspect of the invention, by suitably choosing the angle β it is possible to obtain three MSE measuring systems which are fast enough to detect the condition where $MSE_0$ is no longer the best, before the number of decider errors on the "central path" - where main carrier synchronization is performed by the first MAIN CARRIER SYNC1 circuit and XPIC carrier synchronization is performed with a rotation obtained by means of the XPIC PLL - is such as to cause complete loss of alignment with the XPIC PLL. At this point the selector 61 adjusts the phase correction θX output to the said XPIC PLL, providing a further phase correction by +β or-β, which brings the PLL back to the locking zone: basically one of the "lateral paths" takes the place of the "central path".

In principle the blocks 58,59,60 for calculating the MSE which drive the controller of the three-path mechanism should be as fast as possible, to allow synchronization to be brought rapidly on the best path and reduce the risk of having an error burst; in fact it is advantageous to reach a compromise between this requirement and the need to have in any case a measurement which is sufficiently averaged to prevent the effect of the decision errors which falsify the measurement of an MSE from causing unnecessary path changes. The simulations carried out have resulted in the discovery that it is advantageous to choose to use a sliding average with a length of between 12 and 20 symbols, preferably 16 symbols.

It is therefore clear how with the demodulation and reconstruction system according to the invention it is possible to solve the problem of not being able to maintain alignment, typical of decision-directed synchronization, in all conditions owing to decision errors, by constructing a mechanism which controls the operation of the XPIC PLL from outside the PLL itself, by means of a comparison of the quality of the cancellation performed using the phase calculated by the XPIC PLL with that of other cancellation attempts performed with different phases. In the case where an initial lock loss of the PLL is detected, the system takes action suitably correcting its phase correction. This mechanism is similar to that implemented on the main PLL; in this latter case the "external" monitoring is the phase measured on the pilot symbols, while in the case of the XPIC PLL it is the MSE measured on the "lateral" phase paths in relation to the "central" path.

Preferably the factor which controls the gain of the AGC 3,41,42 for amplitude correction is common to the three paths and is preferably calculated on the basis of the first decider error and the first estimation attempt signal A'H by means of a respective block 12 for detection of an amplitude error (similar to that already described with reference to Fig. 4) and a following accumulator 13; this results in simplification of the LEV ADJ circuitry for amplitude normalization, assisted by the fact that there are no significant level differences induced by the different rotation phases applied to the three different cancellation attempts.

The main phase synchronization is instead performed by applying three different correction angles θM, θ+M and θ-M; this is achieved because there is a fast control which is degraded by the decision errors, so that it is advantageous to benefit instantaneously from the path which produces fewer decision errors.

Periodically the rotation applied by the three main PLL is overwritten by the phase correction measured on the pilot symbol which, being free from decision errors, is instead always the same on the three paths and chosen, for example, by the central main synchronization circuit, as shown in Figure 14.

## DETERMINATION OF THE DISCRIMINATION ANGLE B

With reference to Figure 9, which shows the trend of the MSE measured as a function of the error of the cancellation phase φ, it is possible to identify a value of MSE (and therefore of φ) whereby, once exceeded, the decision errors occur with a frequency such as to make operation of the "decision-directed" PLL impossible. If the interfering signal belongs to a modulation with a high number of states, the trend of the symbol error rate as a function of the MSE, in the case where the cause of the error is the cross-polar interference, may be regarded as being approximately similar to the trend caused by AWGN noise.

In addition to this, the real MSE, namely the result of the comparison between the symbols received and those transmitted, tend to differ from that measured (comparison between the received symbols and the decided symbols) tending asymptotically towards the value 2/3, owing to the decision errors.

The limit beyond which the "decision-directed" algorithms collapse may be indicatively located at a symbol error rate of about 10%, which corresponds to a real MSE of about 0.53 and to a measured MSE of 0.43. The aim of the three-path system of the invention is to detect a loss of synchronism of the XPIC PLL and correct the instantaneous phase correction θX before the limit MSE value is reached; with reference to Figure 11, this means that the angle β must be preferably such that for φ=±β/2, namely at the points where the MSE curve of the central path intersects the curves of the other two lateral paths, the measured MSE does not exceed 0.43 or alternatively the real MSE does not exceed 0.53.

The expressions of the three real MSE are as follows:

$$MSE_0 = MSE_{FLOOR} + \frac{P_H}{XPD} \cdot \varphi^2$$

$$MSE+= MSE_{FLOOR} + \frac{P_H}{XPD} \cdot (\varphi + \beta)^2$$

$$MSE-= MSE_{FLOOR} + \frac{P_H}{XPD} \cdot (\varphi - \beta)^2$$

At the points of intersection between $MSE_0$ and the other curves the MSE has the value:

$$MSE_{TH}(\beta) = MSE_{FLOOR} + \frac{P_H}{XPD} \cdot (\frac{\beta^2}{4})$$

In the case of squared constellations with M states it has the value:

$$MSE_{TH}(\beta) = MSE_{FLOOR} + \frac{2 \cdot (M-1)}{(3 \cdot XPD)} \cdot (\frac{\beta^2}{4})$$

The inverse expression gives rise to a preferred value of β as a function of the threshold MSE which is desired:

$$\beta = \sqrt{\frac{6 \cdot XPD \cdot (MSE_{TH} - MSE_{FLOOR})}{(M-1)}}$$

If the constellation is of the cross type it is possible to use the β of the squared modulation below (e.g. 64QAM for 128QAM) divided by a factor equal to the square root of 2.

Therefore, according to a preferred aspect of the invention, the value of β is determined based on:

- the modulation: with an increase in the number of states β is reduced since the system is less tolerant in respect of the error of the cancellation phase; and/or
- the estimated XPD which, once the system is aligned, is obtained from the amplitude of the coefficients of the XPIC cancellation filter: with an increase of the XPD β is increased in order to take advantage of the reduction in the residual interference for the same angle error; and/or
- the $MSE_{TH}$ (real MSE which is to be obtained at the exchange threshold), nominally assigned parameter which preferably must not be higher then 0.53: the lower $MSE_{TH}$, the lower β will be chosen; and/or
- the real "floor" MSE, $MSE_{FLOOR,}$ produced by the disturbances uncorrelated with the cross-polar interference (mainly the AWGN noise); it is estimated by accumulating the amplitude of the decider error over a long period of time since it should ideally be a measurement not influenced by short duration events. In the formula which expresses β it is necessary to have a real $MSE_{FLOOR}$ so that the measured MSE must be correct taking into account the effect of the decision errors; in the case of AWGN noise the correction factor is known and may be obtained from a table. With an increase of $MSE_{FLOOR}$ the angle β decreases down to zero where $MSE_{FLOOR}=MSE_{TH}$, this being a condition in which it is no longer possible to discriminate between the three paths.

It is understood that it is within the competence of the person skilled in the art to use a criterion for choosing the angle β different from the preferred criterion illustrated above.

Although described in the context of a number of embodiments and a number of preferred examples of embodiment of the invention it is understood that the present description also comprises steps of processing methods corresponding to the operational characteristics of the embodiments described and that the scope of protection of the present patent is determined solely by the accompanying claims.

In particular it is within the scope of the person skilled in the art to adapt the elements described in connection with radio relays operating in a Full Outdoor configuration or with radiofrequency modulation and conversion performed in a single external reception/transmission unit (ODU) to radio relays operating in a split-mount configuration, with an internal unit (IDU) connected to an external unit (ODU).

The present description also includes a MAIN CARRIER SYNC circuit for a signal received and free from a cross-polar interference component for a system for reception, demodulation and reconstruction of signals (AH,AV) modulated and transmitted isofrequentially and with orthogonal polarization on a radio relay link and comprising pilot symbols in its sequence of modulation symbols,
the circuit comprising:

- a phase rotator (33) which performs a first rough main phase synchronization, applying a first phase correction θM to the signal received, and outputs a first roughly reconstructed signal W'H;
- a phase locked loop (PLL MAIN) which receives at its input said roughly reconstructed signal W'H and outputs said first phase correction θM, comprising:

  -- a decider (34) which on the basis of the roughly reconstructed signal W'H produces a decided symbol A'H, i.e. attempt at estimating the transmitted signal AH;
  -- a subtractor 36,36 which compares the roughly reconstructed signal W'H and the decided symbol A'H, outputting a decider 34 error $\varepsilon^{(3)}$H;
  -- a phase detector 9 which correlates the decider error $\varepsilon^{(3)}$H with the roughly reconstructed signal W'H, outputting a phase error;
  -- a loop filter 10a which receives at its input and filters the phase error calculated by the phase detector 9;
  -- an accumulator 10b for accumulating the filtered phase error, designed to output a phase correction θM;

- a circuit 29,4,30,31,32 for refined main synchronization, which receives at its input the roughly reconstructed signal W'H and comprises:

  -- a device 30,31,32 for calculating a refined phase correction θP, which:
  --- receives at its input the signal W'H and extracts from it - in a manner synchronized with the sequence of symbols of the signal - the pilot symbols,
  --- detects a phase error θ'P for each pilot symbol; and
  --- calculates a phase correction θP by means of interpolation with the phase errors θ'P detected;
  -- a delayer (29) which receives at its input the signal W'H and aligns it with the device for calculating a refined phase correction θP, compensating for the interpolation delay;
  -- a rotator 4 which applies to the delayed signal W'H the phase correction θP provided by the device 30,31,32 for calculating a refined phase correction θP, outputting a precisely reconstructed signal WH;

  wherein said accumulator 10b of the loop PLL MAIN comprises a switch which, when a synchronism indicating the reception and extraction of a pilot symbol occurs, replaces the phase correction calculated on the decider (34) error, filtered and accumulated, with the phase error θ'P measured on the pilot symbol received, which error is output by the loop PLL MAIN as phase correction θM.

## Claims

1. Apparatus for processing a first signal ($Y_H$) received on a reception branch associated with a first polarization and a second signal ($Y_V$) received on a branch associated with a second polarization orthogonal to the first polarization, for a system for receiving, demodulating and reconstructing a pair of signals (AH,AV) modulated and transmitted isofrequentially and with orthogonal polarization on a radio link and comprising pilot symbols in their sequence of modulation symbols,
the apparatus comprising:

   - a circuit XPIC CARRIER SYNC for cancellation of a cross-polar interference component ($T_V$) from the first signal ($Y_H$) received, by means of the signal ($Y_V$) received on the orthogonal polarization branch,
   said circuit XPIC CARRIER SYNC comprising:

     -- a first phase rotator (21) which imparts a phase rotation θX to the second signal ($Y_V$),
     -- a first adder (2) which adds the first signal ($Y_H$) to the second signal ($Y_V$) rotated by θX coming from the first rotator (21), obtaining a first signal subject to a cross-polar interference cancellation attempt;
     -- a second phase rotator (38) which imparts a second phase rotation θX-β to the second signal ($Y_v$),
     -- a second adder (37) which adds the first signal ($Y_H$) to the second signal ($Y_V$) rotated by θX+β coming from the second rotator (38), obtaining a second signal subject to a cross-polar interference cancellation attempt;
     -- a third phase rotator (40) which imparts a third phase rotation θX-β to the second signal $Y_V$,

-- a third adder (39) which adds the first signal ($Y_H$) to the second signal ($Y_V$) rotated by $\theta X-\beta$ coming from the third rotator (40), obtaining a third signal subject to a cross-polar interference cancellation attempt;
-- wherein $\beta$ is an additional phase rotation;
-- a phase locked loop PLL XPIC which provides at its output said first phase rotation $\theta X$ for the first cross-polar interference cancellation attempt, comprising:

--- a rotator (11;8) which counter-rotates a first decider error $\varepsilon^{(3)}H$ emitted by a first main carrier synchronization circuit (MAIN CARRIER SYNC1), applying a rotation equal to the inverse of a first phase correction $\theta M$;
--- a phase error detector (23) which receives at its input the first counter-rotated decider error $\varepsilon'H$ obtained and calculates an estimate of the phase error of the first cross-polar interference cancellation performed;
--- a filter for filtering the estimated phase error calculated and an accumulator (24), arranged in series with the detector (23), at the output of the accumulator there being produced the first phase rotation $\theta X$ for the first cross-polar interference cancellation attempt;

- a first main carrier synchronization circuit (MAIN CARRIER SYNC1), which receives at its input the first signal subject to a cross-polar interference cancellation attempt, applies thereto the first phase correction $\theta M$ and produces at its output a signal WH reconstructed with precision and said first decider error $\varepsilon^{(3)}H$;
- a decider (5) which receives at its input the reconstructed signal WH and emits a definitive decided signal AH;
- a second main carrier synchronization circuit (MAIN CARRIER SYNC2), which receives at its input the second signal subject to a cross-polar interference cancellation attempt, applies thereto a second phase correction $\theta+M$ and produces at its output a second decider error $\varepsilon^{(3)}+H$;
- a third main carrier synchronization circuit (MAIN CARRIER SYNC3), which receives at its input the third signal subject to a cross-polar interference cancellation attempt, applies thereto a third phase correction $\theta-M$ and produces at its output a third decider error $\varepsilon^{(3)}-H$;;
- a controller which performs the selection of the first phase rotation $\theta X$ to be imparted to the first signal by the first rotator (21), and comprises:

-- three blocks (58,59,60) for calculating a mean squared error, i.e. MSE, ($MSE_0$,MSE+,MSE-) calculated respectively on the first, second and third decider errors ($\varepsilon^{(3)}H,\varepsilon^{(3)}+H,\varepsilon^{(3)}-H$) emitted by the respective first, second and third main carrier synchronization circuits;

-- a selector (61) which comprises a fast MSE comparator able to compare the three MSEs calculated ($MSE_0$;MSE+;MSE-) and emit - on the basis of said comparison - a selection of the phase correction ($\theta X(n+1)$) to be imparted for the first cross-polar interference cancellation attempt (21,2).

2. Processing apparatus according to Claim 1, wherein the first main carrier synchronization circuit (MAIN CARRIER SYNC1) comprises:

- a phase rotator (33) which performs a first rough main phase synchronization applying the first phase correction $\theta M$ to the first signal subject to a cross-polar interference cancellation attempt and provides at its output a first roughly reconstructed signal W'H;
- a phase locked loop (PLL MAIN) which receives at its input said roughly reconstructed signal W'H and provides at its output said first phase correction $\theta M$, comprising:

-- a decider (34) which on the basis of the roughly reconstructed signal W'H produces a decided symbol A'H, i.e. attempt at estimating the transmitted signal AH;
-- a subtractor (36,36) which compares the roughly reconstructed signal W'H and the decided symbol A'H, providing at its output the first decider (34) error $\varepsilon^{(3)}H$;
-- a phase detector (9) which correlates the decider error $\varepsilon^{(3)}H$ with the roughly reconstructed signal W'H, providing at its output a phase error;
-- a loop filter (10a) which receives at its input and filters the phase error calculated by the phase detector (9);
-- an accumulator (10b) of the filtered phase error, which is designed to provide at its output the first phase correction $\theta M$;

- a refined main synchronization circuit (29,4,30,31,32) which receives at its input the roughly reconstructed signal W'H and comprises:

-- a device (30,31,32) for calculating a refined phase correction θP which:

--- receives at its input the signal W'H and extracts from it - in a manner synchronized with the symbol sequence of the signals - the pilot symbols,
--- detects a phase error θ'P for each pilot symbol; and
--- calculates a phase correction θP by means of interpolation with the phase errors θ'P detected;

-- a delayer (29) which receives at its input the signal W'H and aligns it with the device for calculating a refined phase correction θP, compensating for the interpolation delay;
-- a rotator (4) which applies to the delayed signal W'H the phase correction θP provided by the device (30,31,32) for calculating a refined phase correction θP, providing at its output a precisely reconstructed signal WH; wherein said accumulator (10b) of the phase locked loop (PLL MAIN) comprises a switch which, when a synchronism indicating the reception and extraction of a pilot symbol occurs, replaces the phase correction calculated on the decider (34) error, filtered and accumulated, with the phase error θ'P measured on the pilot symbol received, which error is output by the phase locked loop (PLL MAIN) as first phase correction θM.

3. Apparatus according to any one of the preceding claims, wherein the second and third main carrier synchronization circuits (MAIN CARRIER SYNC2; MAIN CARRIER SYNC3) each comprise:

-- a rotator (46) which applies a respective second/third phase correction θ+M/θ-M to the respective second/third signal subject to a cross-polar interference cancellation attempt, and provides at its output a respective second/third roughly reconstructed signal W'+H/W'-H;
-- a phase locked loop (PLL MAIN 2;PLL MAIN 3) which receives at its input the respective roughly reconstructed signal W'+H/W'-H and provides at its output said second/third phase correction θ+M/θ-M, comprising:

--- a decider (48) which on the basis of the roughly reconstructed signal W'+H/W'-H produces a decided symbol A'+H/A'-H, that is an attempt at estimating the transmitted signal AH;
--- a subtractor (49,50) which compares the respective second/third roughly reconstructed signal W'+H/W'-H and the respective decided symbol A'+H/ A'-H, providing at its output the respective second/third decider error $\varepsilon^{(3)+}H/\varepsilon^{(3)-}H$;
--- a phase detector (54) which correlates the respective second/third decider error $\varepsilon^{(3)+}H/\varepsilon^{(3)-}H$ with the respective second/third roughly reconstructed signal W'+H/W'-H, obtaining at its output a respective second/third phase error;

-- a loop filter (56a) which receives at its input and filters the respective second/third phase error calculated by the phase detector (54);
-- an accumulator (56b) of the filtered phase error, which is designed to provide at its output the respective second/third phase correction θ+M/θ-M; wherein the accumulators (56b,57b) of the second and third main synchronization circuits (MAIN CARRIER SYNC2; MAIN CARRIER SYNC3) each comprise a respective switch which, when a synchronism indicating the reception and extraction of a pilot symbol occurs, replaces the phase correction calculated, filtered and accumulated, with the phase error θ'P measured on the pilot symbol received, which is output as second and third phase correction θ+M, θ-M.

4. Apparatus according to Claim 1, 2 or 3, wherein the selector (61) selects:

- the first phase rotation θX if:
MSE- < MSEO < MSE+ ; or
- the second phase rotation θX+β if:
MSEO < MSE0+ < MSE-; or
- the third phase rotation θX-β if:
MSEO < MSEO- < MSE+.

5. Apparatus according to any one of Claims 1-4, wherein the additional rotation β is defined on the basis of a degree of decoupling (XPD) between the two polarizations, and/or a mean squared decision error ($MSE_{FLOOR}$) originating from disturbances not correlated with the cross-polar interference, and/or the modulation used.

6. System for receiving, demodulating and reconstructing pairs of signals (AH,AV) modulated and transmitted isofrequentially and with orthogonal polarization on a radio link and comprising pilot symbols in their sequence of modulation symbols, comprising:

- an apparatus according to any one of Claims 1-5;
- a transverse equalizer filter TDE which is situated upstream of the first canceller and which receives at its input a signal ($X_H$) received on the branch associated with said first polarization and provides at its output said first signal ($Y_H$) to be processed;
- an interference cancellation filter XPIC (20) which is situated upstream of the first rotator and receives at its input a signal ($X_V$) received on the orthogonal polarization branch and provides at its output said second signal ($Y_V$);

wherein the coefficients of the filter XPIC (20) are updated by correlating the decider error emitted by the first main carrier synchronization circuit and rotated by the inverse of θX with samples of the signal ($X_V$) received at the input of the filter XPIC (20) and obtained at instants immediately before and after the symbol on which the decider error was calculated.

7. Method for processing a first signal ($Y_H$) received on a reception branch associated with a first polarization (H) and a second signal ($Y_V$) received on a branch associated with a second polarization (V) orthogonal to the first polarization, for a system for receiving, demodulating and reconstructing pairs of signals (AH,AV) modulated and transmitted isofrequentially and with orthogonal polarization on a radio link and comprising pilot symbols in their sequence of modulation symbols,
the method comprising the steps of:

- cancelling (XPIC CARRIER SYNC) a cross-polar interference component ($T_V$) from the first signal ($Y_H$) received, by means of the signal ($Y_V$) received on the orthogonal polarization branch,
said cancellation step comprising:

-- imparting a first phase rotation θX to the second signal $Y_V$ by means of a first phase rotator (21),
-- adding in a first adder (2) the first signal ($Y_H$) to the second signal ($Y_V$) rotated by θX coming from the first rotator (21), obtaining a first signal subject to a cross-polar interference cancellation attempt;
-- imparting a second phase rotation θX+β to the second signal ($Y_V$), by means of a second phase rotator (38),
-- adding in a second adder (37) the first signal $Y_H$ to the second signal ($Y_V$) rotated by θX+β coming from the second rotator (38), obtaining a second signal subject to a cross-polar interference cancellation attempt;
-- imparting a third phase rotation θX-β to the second signal ($Y_V$) by means of a third phase rotator (40),
-- adding in a third adder (39) the first signal ($Y_H$) to the second signal ($Y_V$) rotated by θX-β coming from the third rotator (40), obtaining a third signal subject to a cross-polar interference cancellation attempt;
-- wherein β is an additional phase rotation;
-- providing said first phase rotation θX for the first cross-polar interference cancellation attempt by means of a phase locked loop PLL XPIC, comprising the following substeps:

--- counter-rotating a first decider error $\varepsilon^{(3)}H$ emitted by a first main carrier synchronization circuit (MAIN CARRIER SYNC1), by means of a rotator (11;8), by applying to the first error $\varepsilon^{(3)}H$ a rotation equal to the inverse of a first phase correction θM;
--- calculating an estimate of the phase error of the first cross-polar interference cancellation performed by means of a phase error detector (23) which receives at its input the first counter-rotated decider error ε'H obtained;
--- filtering the estimated phase error calculated and accumulating it in an accumulator (24), at the output of the accumulator there being produced said first phase rotation θX for the first cross-polar interference cancellation attempt;

- sending the first signal subject to a cross-polar interference cancellation attempt to a first main carrier synchronization circuit (MAIN CARRIER SYNC1) which applies thereto the first phase correction θM, and produces at its output a signal WH reconstructed with precision and said first decider error $\varepsilon^{(3)}H$;
- sending the precisely reconstructed signal WH to a decider (5) which emits a definitive decided signal AH;
- sending the second signal subject to a cross-polar interference cancellation attempt to a second main carrier synchronization circuit (MAIN CARRIER SYNC2) which applies thereto a second phase correction θ+M, and produces at its output a second decider error $\varepsilon^{(3)}+H$;
- sending the third signal subject to a cross-polar interference cancellation attempt to a third main carrier synchronization circuit (MAIN CARRIER SYNC3) which applies thereto a third phase correction $\theta$-M, and produces at its output a third decider error $\varepsilon^{(3)}$-H;
- performing a selection of the first phase rotation $\theta$X to be imparted to the first signal by the first rotator (21) via:

    -- calculation of a mean squared error, i.e. MSE, (MSE$_0$,MSE+,MSE-) respectively on the first, second and third decider errors ($\varepsilon^{(3)}$H,$\varepsilon^{(3)}$+H,$\varepsilon^{(3)}$-H) emitted by the respective first, second and third main carrier synchronization circuits;
    -- selection (61) of the phase correction ($\theta$X(n+1)) to be applied during the first cross-polar interference cancellation attempt (21,2) on the basis of a comparison of the three calculated MSEs (MSE$_0$;MSE+;MSE-).

8. Processing method according to the preceding claim, wherein in the first main carrier synchronization circuit (MAIN CARRIER SYNC1) the following operations are performed:

- a first rough main phase synchronization, applying the first phase correction $\theta$M to the first signal subject to a cross-polar interference cancellation attempt by means of a phase rotator (33) and providing at its output a first roughly reconstructed signal W'H;
- providing said first phase correction $\theta$M by means of a phase locked loop (PLL MAIN) which receives at its input said roughly reconstructed signal W'H, comprising the steps of:

    -- producing a decided symbol A'H, i.e. an attempt at estimating the transmitted signal AH, on the basis of the roughly reconstructed signal W'H by means of a decider (34);
    -- comparing the roughly reconstructed signal W'H and the decided symbol Â'H, providing the first decider (34) error $\varepsilon^{(3)}$H;
    -- correlating the decider error $\varepsilon^{(3)}$H with the roughly reconstructed signal W'H, so as to produce a phase error;
    -- filtering the phase error calculated;
    -- accumulating in an accumulator (10b) the filtered phase error, providing at the accumulator output the first phase correction $\theta$M;

- performing a refined main synchronization of the roughly reconstructed signal W'H, with the substeps of:

    -- calculating a refined phase correction $\theta$P by:

        --- receiving the signal W'H and extracting from it - in a manner synchronized with the symbol sequence of the signal - the pilot symbols,
        --- detecting a phase error $\theta$'P for each pilot symbol; and
        --- calculating a phase correction $\theta$P by means of interpolation with the phase errors $\theta$'P detected;

    -- delaying (29) the signal W'H so as to align it with the calculation of the refined phase correction $\theta$P, compensating for the interpolation delay;
    -- applying to the delayed signal W'H the refined phase correction $\theta$P, providing at the output a precisely reconstructed signal WH;

wherein, when a synchronism indicating the reception and extraction of a pilot symbol occurs, the phase correction calculated on the decider (34) error, filtered and accumulated, is replaced with the phase error $\theta$'P measured on the pilot symbol received, which error is output by the phase locked loop PLL MAIN as a phase correction $\theta$M.

9. Method according to either one of Claim 7 or 8, wherein the following operations are performed in the second and third main carrier synchronization circuits (MAIN CARRIER SYNC2; MAIN CARRIER SYNC3):

    -- applying a respective second/third phase correction $\theta$+M/$\theta$-M to the respective second/third signal subject to a cross-polar interference cancellation attempt, producing a respective second/third roughly reconstructed signal W'+H/W'-H;
    -- producing said second/third phase correction $\theta$+M/$\theta$-M by means of a respective phase locked loop (PLL MAIN 2;PLL MAIN 3) which receives at its input the respective roughly reconstructed signal W'+H/W'-H, the step of producing the phase correction comprising:
    -- producing a decided symbol A'+H/A'-H, i.e. an attempt at estimating the transmitted signal AH, on the basis of the roughly reconstructed signal W'+/W- H by means of a decider (48);

--- producing the respective second/third decider error $\varepsilon^{(3)}$+H/$\varepsilon^{(3)}$-H, by comparing the respective second/third roughly reconstructed signal W'+H/W'-H and the respective decided symbol A'+H/A'-H;

--- correlating the respective second/third decider error $\varepsilon^{(3)}$+H/$\varepsilon^{(3)}$-H with the respective second/third roughly reconstructed signal W'+H/W'-H, obtaining a respective second/third phase error;

-- filtering the respective second/third phase error calculated;

-- accumulating in a respective accumulator (56b;57b) the filtered phase error, and obtaining at the output of the accumulator the respective second/third phase correction θ+M/θ-M;

wherein, when a synchronism indicating the reception and extraction of a pilot symbol occurs, the phase correction calculated on the decider error, filtered and accumulated, is replaced with the phase error θ'P measured on the pilot symbol received, which error is output as the second and third phase correction θ+M, θ-M.

10. Method according to Claim 7, 8 or 9, wherein during the selection step the following is selected:

- the first phase rotation θX if:
MSE- < MSEO < MSE+ ; or
- the second phase rotation θX+β if:
MSEO < MSE0+ < MSE-; or
- the third phase rotation θX-β if:
MSEO < MSE- < MSE+.

11. Method according to any Claim 8-10, wherein the additional rotation β is set on the basis of a degree of decoupling (XPD) between the two polarizations, and/or a mean squared decision error ($MSE_{FLOOR}$) originating from disturbances not correlated with the cross-polar interference, and/or the modulation used.


**Patentansprüche**

1. Vorrichtung zur Verarbeitung eines ersten Signals ($Y_H$), das auf einem Empfangszweig empfangen wird, der einer ersten Polarisierung zugeordnet ist, und eines zweiten Signals ($Y_V$), das auf einem Zweig empfangen wird, der einer zweiten Polarisierung orthogonal zu der ersten Polarisierung zugeordnet ist,
für ein System zum Empfangen, Demodulieren und Rekonstruieren eines Paars von Signalen (AH, AV), die moduliert und isofrequent mit orthogonaler Polarisierung auf einer Funkverbindung übertragen werden und Pilotsymbole in ihrer Modulationssymbolsequenz aufweisen,
die Vorrichtung aufweisend:

- einen XPIC CARRIER SYNC -Schaltkreis zur Unterdrückung einer kreuzpolaren Interferenzkomponente ($V_V$) aus dem ersten empfangenen Signal ($Y_H$) vermittels des Signals ($Y_V$), das auf dem orthogonalen Polarisierungszweig empfangen wird, wobei dieser XPIC CARRIER SYNC-Schaltkreis aufweist:

-- eine erste Phasendreheinrichtung (21), die dem zweiten Signal ($Y_V$) eine Phasendrehung θX vermittelt,
-- eine erste Addiereinrichtung (2), die das erste Signal ($Y_H$) dem zweiten von der ersten Dreheinrichtung (21) um θX gedrehten Signal ($Y_V$) hinzuaddiert, wodurch ein erstes Signal erhalten wird, das einem kreuzpolaren Interferenz-Unterdrückungsversuch unterzogen wird,
-- eine zweite Phasendreheinrichtung (38), die dem zweiten Signal ($Y_V$) eine zweite Phasendrehung θX-β vermittelt,
-- einen zweiten Addierer (37), der das erste Signal ($Y_H$) dem zweiten von der ersten Dreheinrichtung (21) um θX+β gedrehten Signal ($Y_V$) hinzuaddiert, wodurch ein zweites Signal erhalten wird, das einem kreuzpolaren Interferenz-Unterdrückungsversuch unterzogen wird,
-- eine dritte Phasendreheinrichtung (40), die dem zweiten Signal $Y_V$ eine dritte Phasendrehung θX-β hinzuaddiert,
-- einen dritten Addierer (39), der das erste Signal ($Y_H$) dem zweiten Signal ($Y_V$) um θX-β gedreht von der dritten Dreheinrichtung (40) hinzuaddiert, wodurch ein drittes Signal erhalten wird, das einem kreuzpolaren Interferenz-Unterdrückungsversuch unterzogen wird;
-- wobei β eine zusätzliche Phasendrehung ist;
-- einen PLL XPIC Phasenregelkreis, der an seinem Ausgang die besagte erste Phasendrehung θX für den ersten kreuzpolaren Interferenz-Unterdrückungsversuch bereitstellt, aufweisend:

--- eine Dreheinrichtung (11; 8), die einen ersten Entscheider-Fehler $\varepsilon^{(3)}$H, der durch die erste Hauptträgersynchronisierungsschaltung (MAIN CARRIER SYNC1) emittiert wird, gegenläufig dreht, wodurch eine Drehung gleich dem Inversen einer ersten Phasenkorrektur θM angelegt wird;

--- einen Phasenfehlerdetektor (23), der an seinem Eingang den erhaltenen ersten gegenläufig gedrehten Entscheider-Fehler $\varepsilon$'H aufnimmt und einen Schätzwert des Phasenfehlers der ersten durchgeführten kreuzpolaren-Interferenzunterdrückung berechnet;

--- ein Filter zum Filtern des berechneten geschätzten Phasenfehlers und einen Speicher (24), der mit dem Detektor (23) in Reihe geschaltet ist, wobei an dem Ausgang des Speichers die erste Phasendrehung θX für den ersten kreuzpolaren Interferenz-Unterdrückungsversuch erzeugt wird;

- einen ersten Hauptträger-Synchronisierungsschaltkreis (MAIN CARRIER SYNC1), der an seinem Eingang das erste Signal aufnimmt, das einem kreuzpolaren Interferenz-Unterdrückungsversuch unterzogen wird, an diesem die erste Phasenkorrektur θM anlegt und an seinem Ausgang ein Signal WH, das mit Präzision rekonstruiert ist, und diesem ersten Entscheider-Fehler $\varepsilon^{(3)}$H erzeugt;

- eine Entscheidungseinrichtung (5), die an ihrem Eingang das rekonstruierte Signal WH aufnimmt und ein definitiv entschiedenes Signal ÂH emittiert;

- einen zweiten Hauptträger-Synchronisierungsschaltkreis (MAIN CARRIER SYNC2), der an seinem Eingang das zweite Signal aufnimmt, das einem kreuzpolaren Interferenzunterdrückungsversuch unterzogen wird, an diesem eine zweite Phasenkorrektur θ+M anlegt und an seinem Ausgang einen zweiten Entscheider-Fehler $\varepsilon^{(3)}$+H erzeugt;

- einen dritten Hauptträger-Synchronisierungsschaltkreis (MAIN CARRIER SYNC3), der an seinem Eingang das dritte Signal aufnimmt, das einem kreuzpolaren Interferenz-Unterdrückungsversuch unterzogen wird, an diesem eine dritte Phasenkorrektur θ-M anlegt und an seinem Ausgang einen dritten Entscheiderfehler $\varepsilon^{(3)}$-H erzeugt;

- einen Controller, der die Auswahl der ersten Phasendrehung θX vornimmt, die dem ersten Signal durch die erste Dreheinrichtung (21) vermittelt werden soll, und der aufweist:

-- drei Blöcke (58, 59, 60) zur Berechnung einer mittlerer quadratischen Abweichung, d.h. MSE, ($MSE_0$, MSE+,MSE-), die jeweils anhand des ersten, zweiten und dritten Entscheiderfehlers ($\varepsilon^{(3)}$H, $\varepsilon^{(3)}$+H, $\varepsilon^{(3)}$-H) berechnet sind, die durch den ersten, zweiten bzw. dritten Hauptträger-Synchronisierungsschaltkreis emittiert werden;

-- eine Auswahleinrichtung (61), die einen schnellen MSE-Komparator aufweist, der in der Lage ist, diese berechneten drei MSEs ($MSE_0$, MSE+, MSE-) zu vergleichen und - auf Grundlage dieses Vergleichs - eine Auswahl der Phasenkorrektur (θX(n+1)) zu emittieren, die für den ersten kreuzpolaren Interferenz-Unterdrückungsversuch (21, 2) vermittelt werden soll.

2. Verarbeitungsvorrichtung nach Anspruch 1, wobei der erste Hauptträger-Synchronisierungsschaltkreis (MAIN CARRIER SYNC1) aufweist:

- eine Phasendreheinrichtung (33), die eine erste grobe Hauptphasensynchronisierung durchführt, indem die erste Phasenkorrektur θM an dem ersten Signal angelegt wird, das einem ersten kreuzpolaren Interferenz-Unterdrückungsversuch unterzogen wird, und an seinem Ausgang ein erstes grob-rekonstruiertes Signal W'H bereitstellt;

- einen Phasenregelkreis (PLL MAIN), der an seinem Eingang dieses grob-rekonstruierte Signal W'H aufnimmt und an ihrem Ausgang diese erste Phasenkorrektur θM bereitstellt, aufweisend:

-- eine Entscheidungseinrichtung (34), die auf Grundlage des grob-rekonstruierten Signals W'H ein entschiedenes Symbol Â'H erzeugt, d.h. Versuch zur Schätzung des übertragenen Signals AH,

-- eine Subtraktions-Einrichtung (36, 36), die das grob-rekonstruierte Signal W'H und das entschiedene Symbol Â'H vergleicht, und an seinem Ausgang den ersten Entscheider (34) Fehler $\varepsilon^{(3)}$H bereitstellt;

-- einen Phasendetektor (9), der den ersten Entscheiderfehler $\varepsilon^{(3)}$H mit dem grob-rekonstruierten Signal W'H korreliert, und an seinem Ausgang einen Phasenfehler bereitstellt;

-- ein Schleifen-Filter (10a), das an seinem Eingang den durch den Phasendetektor (9) berechneten Phasenfehler aufnimmt und filtert;

-- einen Speicher (10b) des gefilterten Phasenfehlers, der eingerichtet ist, an seinem Ausgang die erste Phasenkorrektur θM bereitzustellen;

- einen verfeinerten Hauptsynchronisierungsschaltkreis (29, 4, 30, 31, 32), der an seinem Eingang das grob-rekonstruierte Signal W'H aufnimmt und aufweist:

-- eine Vorrichtung (30, 31, 32) zur Berechnung einer verfeinerten Phasenkorrektur $\theta$P, welche:

--- an ihrem Eingang das Signal W'H aufnimmt und aus diesem - in einer mit der Symbolfolge der Signale synchronisierten Art und Weise - die Pilotsymbole extrahiert,
--- einen Phasenfehler $\theta$'P für jedes Pilotsymbol detektiert; und

- eine Phasenkorrektur $\theta$P vermittels Interpolation mit den detektierten Phasenfehlern $\theta$'P berechnet;

-- eine Verzögerungseinrichtung (29), die an ihrem Eingang das Signal W'H aufnimmt und dieses an der Vorrichtung zur Berechnung einer verfeinerten Phasenkorrektur $\theta$P ausrichtet, wodurch die Interpolations-verzögerung ausgeglichen wird;
-- eine Dreheinrichtung (4), die an dem verzögerten Signal W'H die Phasenkorrektur $\theta$P anlegt, die durch die Vorrichtung (30, 31, 32) zur Berechnung einer verfeinerten Phasenkorrektur $\theta$P bereitgestellt wird, und an ihrem Ausgang ein präzise rekonstruiertes Signal WH bereitstellt;

wobei dieser Speicher (10b) des Phasenregelkreises (PLL MAIN) einen Schalter aufweist, der, wenn eine Synchronisierung erfolgt, welche den Empfang und die Extraktion eines Pilotsymbols anzeigt, die gefilterte und gespeicherte, basierend auf der Entscheidungseinrichtung (34) berechnete Phasenkorrektur durch den an dem Pilotsymbol gemessenen Phasenfehler $\theta$'P ersetzt, welcher Fehler durch den Phasenregelkreis (PLL MAIN) als erste Phasenkorrektur $\theta$M ausgegeben wird.

3. Vorrichtung nach einem der vorstehenden Ansprüche, wobei die zweiten und dritten Hauptträger-Synchronisierungsschaltkreise (MAIN CARRIER SYNC2, MAIN CARRIER SYNC3) jeweils aufweisen:

-- eine Dreheinrichtung (46), die eine jeweilige zweite/dritte Phasenkorrektur $\theta$+M/$\theta$-M an dem jeweiligen zweiten/dritten Signal anlegt, das einem kreuzpolaren Interferenz-Unterdrückungsversuch unterzogen wird, und an ihrem Ausgang ein jeweiliges zweites/drittes grob-rekonstruiertes Signal W'+H/W'-H bereitstellt;
-- einen Phasenregelkreis (PLL MAIN 2; PLL MAIN 3), der an seinem Eingang das jeweilige grob rekonstruierte Signal W'+H/W'-H aufnimmt und an seinem Ausgang die besagte Phasenkorrektur $\theta$+M/$\theta$-M bereitstellt, auf-weisend:

--- eine Entscheidungseinrichtung (48), die auf Grundlage des grob-rekonstruierten Signals W'+H/W'-H ein entschiedenes Symbol Ä+H/Ä-H erzeugt, also ein Versuch zur Schätzung des übertragenen Signals AH,
--- eine Subtraktions-Einrichtung (49, 50), die das jeweilige zweite/dritte grob-rekonstruierte Signal W'+H/W'-H und das jeweilige entschiedene Symbol Â'+H/Â'-H vergleicht, und an ihrem Ausgang den jeweiligen zweiten/dritten Entscheiderfehler $\varepsilon^{(3)+}$H/$\varepsilon^{(3)-}$H bereitstellt;
--- einen Phasendetektor (54), das den jeweiligen zweiten/dritten Entscheiderfehler $\varepsilon^{(3)+}$H/$\varepsilon^{(3)-}$H mit dem jeweiligen zweiten/dritten grob-rekonstruierten Signal W'+H/W'-H korreliert, wodurch an seinem Ausgang ein jeweiliger zweiter/dritter Phasenfehler erhalten wird;

-- einen Schleifen-Filter (56a), der an seinem Eingang den jeweiligen durch den Phasendetektor (54) berechneten zweiten/dritten Phasenfehler aufnimmt und filtert;
-- einen Speicher (56b) des gefilterten Phasenfehlers, der eingerichtet ist, an seinem Ausgang die jeweilige zweite/dritte Phasenkorrektur $\theta$+M/$\theta$-M bereitzustellen; wobei die Speicher (56b, 57b) der zweiten und dritten Hauptsynchronisierungsschaltkreise (MAIN CARRIER SYNC2; MAIN CARRIER SYNC3) jeweils einen jeweiligen Schalter aufweisen, der, wenn eine Synchronisierung erfolgt, die den Empfang und die Extraktion eines Pilotsymbols anzeigt, die gefilterte und gespeicherte, berechnete Phasenkorrektur durch den an dem empfan-genen Pilotsymbol gemessenen Phasenfehler $\theta$'P ersetzt, was als zweite und dritte Phasenkorrektur $\theta$+M, $\theta$-M ausgegeben wird.

4. Vorrichtung nach Anspruch 1, 2 oder 3, wobei die Auswahleinrichtung (61) auswählt:

- die erste Phasendrehung $\theta$X, falls:
MSE- < MSEO < MSE+; oder
- die zweite Phasendrehung $\theta$X+$\beta$, falls:
MSEO < MSE0+ < MSE-; oder

- die dritte Phasendrehung θX-β, falls:
MSEO < MSEO- < MSE+.

5. Vorrichtung nach einem der Ansprüche 1 bis 4, wobei die zusätzliche Drehung β auf Grundlage eines Entkopplungsgrads (XPD) zwischen den beiden Polarisierungen und/oder einem mittleren quadratischen Entscheider-Fehler (MSE$_{FLOOR}$), der von Störungen stammt, die nicht mit der kreuzpolaren Interferenz korrelieren, und/oder der verwendeten Modulation definiert wird.

6. System zum Empfangen, Demodulieren und Rekonstruieren von Paaren von isofrequent modulierten und übertragenen Signalen (AH, AV) mit orthogonaler Polarisierung auf einer Funkverbindung und die in ihrer Modulationssymbolfolge Pilotsymbole aufweisen, aufweisend:

- eine Vorrichtung nach einem der Ansprüche 1 bis 5;
- ein TDE (Transverse Equalizer Filter), das sich stromaufwärts des ersten Unterdrückers befindet und an seinem Eingang ein Signal (X$_H$) aufnimmt, das auf dem Zweig empfangen wird, der der besagten ersten Polarisierung zugeordnet wird, und an seinem Ausgang dieses erste zu verarbeitende erste Signal (Y$_H$) bereitstellt;
- ein Interferenzunterdrückungsfilter XPIC (20), das sich stromaufwärts der ersten Dreheinrichtung befindet und an seinem Eingang ein Signal aufnimmt (X$_V$), das auf dem Zweig orthogonaler Polarisierung empfangen wird, und an seinem Ausgang das besagte zweite Signal (Y$_V$) bereitstellt;

wobei die Koeffizienten des Filters XPIC (20) durch Korrelieren des Entscheider-Fehlers, der durch den ersten Hauptträgersynchronisierungsschaltkreis emittiert wird und um das Inverse von θX gedreht ist, mit Mustern des Signals (X$_V$), die an dem Eingang des Filters XPIC (20) empfangen werden und zu Zeitpunkten unmittelbar bevor und nach dem Symbol erhalten werden, auf Grundlage dessen der Entscheider-Fehler berechnet wurde.

7. Verfahren zur Verarbeitung eines ersten Signals (Y$_H$), das an einem Empfangszweig empfangen wird, der einer ersten Polarisierung (H) zugeordnet wird, und eines zweiten Signals (Y$_V$), das an einem Zweig empfangen wird, der einer zweiten Polarisierung (V) orthogonal zu der ersten Polarisierung zugeordnet wird,
für ein System zum Empfangen, Demodulieren und Rekonstruieren von Paaren von isofrequent modulierten und übertragenen Signalen (AH, AV) mit orthogonaler Polarisierung auf einer Funkverbindung und die in ihrer Modulationssymbolfolge Pilotsymbole aufweisen,
das Verfahren umfassend die Schritte:

- Unterdrücken (XPIC CARRIER SYNC) einer kreuzpolaren Interferenzkomponente (T$_v$) von dem ersten empfangenen Signal (Y$_H$), mittels des Signals (Y$_V$), das auf dem orthogonalen Polarisierungszweig empfangen wird, wobei der Unterdrückungsschritt umfasst:

-- Vermitteln einer ersten Phasendrehung θX an das zweite Signal Y$_V$ mittels einer ersten Phasendreheinrichtung (21),
-- Addieren, in einer ersten Addiereinrichtung (2), des ersten Signals (Y$_H$) zu dem zweiten Signal (Y$_V$), welches um θX gedreht ist und von der ersten Dreheinrichtung (21) kommt, wodurch ein erstes Signal erhalten wird, das einem kreuzpolaren Interferenz-Unterdrückungsversuch unterzogen wird;
-- Vermitteln einer zweiten Phasendrehung θX+β an das zweite Signal (Y$_V$) vermittels einer zweiten Phasendreheinrichtung (38),
-- Addieren, in einer zweiten Addiereinrichtung (37), des ersten Signals Y$_H$ zu dem zweiten Signal (Y$_V$), das um θX+β gedreht ist und von der zweiten Dreheinrichtung (38) kommt, wodurch ein zweites Signal erhalten wird, das einem kreuzpolaren Interferenz-Unterdrückungsversuch unterzogen wird;
-- Vermitteln einer dritten Phasendrehung θX-β an das zweite Signal (Y$_V$) vermittels einer dritten Phasendreheinrichtung (40),
-- Addieren, in einer dritten Addiereinrichtung (39), des ersten Signals Y$_H$ zu dem zweiten Signal (Y$_V$), das um θX-β gedreht ist und von der dritten Dreheinrichtung (40) kommt, wodurch ein drittes Signal erhalten wird, das einem kreuzpolaren Interferenz-Unterdrückungsversuch unterzogen wird;
-- wobei β eine zusätzliche Phasendrehung ist;
-- Bereitstellen der besagten ersten Phasendrehung θX für den ersten kreuzpolaren Interferenz-Unterdrückungsversuch mittels des Phasenregelkreises PLL XPIC, umfassend die folgenden Teilschritte:

--- Gegenläufiges Drehen einer ersten Entscheider-Fehlers ε$^{(3)}$H, der durch einen ersten Hauptträger-Synchronisierungsschaltkreis (MAIN CARRIER SYNC1) emittiert wird, mittels einer Dreheinrichtung (11; 8), durch Anlegen an den ersten Fehler $\varepsilon^{(3)}$H einer Drehung gleich dem Inversen einer ersten Phasenkorrektur $\theta$M;

--- Berechnen eines Schätzwerts des Phasenfehlers der ersten kreuzpolaren Interferenzunterdrückung, die durch einen Phasenfehlerdetektor (23) durchgeführt wird, der an seinem Eingang den erhaltenen, ersten gegenläufig gedrehten Entscheider-Fehler $\varepsilon$'H aufnimmt;

--- Filtern des berechneten, geschätzten Phasenfehlers und Speichern dieses Fehlers in einem Speicher (24), wobei an dem Ausgang des Speichers die besagte erste Phasendrehung $\theta$X für den ersten kreuzpolaren Interferenz-Unterdrückungsversuch erzeugt wird:

--- Senden des ersten Signals, das einem kreuzpolaren Interferenz-Unterdrückungsversuch unterzogen wird, an einen ersten Hauptträger-Synchronisierungsschaltkreis (MAIN CARRIER SYNC1), der an diesem die erste Phasenkorrektur $\theta$M anlegt, und an seinem Ausgang ein mit Präzision rekonstruiertes Signal WH, und den besagten ersten Entscheider-Fehler $\varepsilon^{(3)}$H erzeugt;

- Senden des präzise rekonstruierten Signals WH an eine Entscheidungseinrichtung (5), die ein definitiv entschiedenes Signal ÄH emittiert;

- Senden des zweiten Signals, das einem kreuzpolaren Interferenz-Unterdrückungsversuch unterzogen wird, an einen zweiten Hauptträger-Synchronisierungsschaltkreis (MAIN CARRIER SYNC2), der an diesem eine zweite Phasenkorrektur $\theta$+M anlegt, und an seinem Ausgang einen zweiten Entscheider-Fehler $\varepsilon^{(3)+}$H erzeugt;

- Senden des dritten Signals, das einem kreuzpolaren Interferenz-Unterdrückungsversuch unterzogen wird, an einen dritten Hauptträger-Synchronisierungsschaltkreis (MAIN CARRIER SYNC3), der an diesem eine dritte Phasenkorrektur $\theta$-M anlegt, und an seinem Ausgang einen dritten Entscheider-Fehler $\varepsilon^{(3)-}$H erzeugt;

- Durchführen einer Auswahl der ersten Phasendrehung $\theta$X, die an das erste Signal durch die erste Dreheinrichtung (21) vermittelt werden soll, über:

-- Berechnung eines mittleren quadratischen Fehlers, d.h. MSE (MSE$_0$, MSE+, MSE-) jeweils an dem ersten, zweiten und dritten Entscheiderfehler ($\varepsilon^{(3)}$H, $\varepsilon^{(3)+}$H, $\varepsilon^{(3)-}$H), die durch die jeweiligen ersten, zweiten und dritten Hauptträger-Synchronisierungsschaltkreise emittiert werden;

-- Auswahl (61) der Phasenkorrektur ($\theta$X(n+1), die während des ersten kreuzpolaren Interferenz-Unterdrückungsversuchs (21, 2) auf Grundlage eines Vergleichs der drei berechneten MSEs (MSE$_0$, MSE+, MSE-) angelegt werden sollen.

8. Verarbeitungsverfahren nach dem vorstehenden Anspruch, wobei in dem ersten Hauptträger-Synchronisierungsschaltkreis (MAIN CARRIER SYNC1) die folgenden Operationen durchgeführt werden:

- eine erste grobe Hauptphasensynchronisierung, Anlegen der ersten Phasenkorrektur $\theta$M an dem ersten Signal, das einem kreuzpolaren Interferenz-Unterdrückungsversuch unterzogen wird, mittels einer Phasendreheinrichtung (33) und Bereitstellen an seinem Ausgang eines ersten grob-rekonstruierten Signals W'H;

- Bereitstellen dieser ersten Phasenkorrektur $\theta$M mittels eines Phasenregelkreises (PLL MAIN), der an seinem Eingang das besagte grob-rekonstruierte Signal W'H aufnimmt, umfassend die Schritte:

-- Erzeugen eines entschiedenen Symbols Â'H, d.h. eines Versuchs zur Schätzung des übertragenen Signals AH, auf Grundlage des grob-rekonstruierten Signals W'H mittels einer Entscheidungseinrichtung (34);

-- Vergleichen des grob-rekonstruierten Signals W'H und des entschiedenen Symbols Ä'H, Bereitstellen den ersten Entscheider (34) Fehlers $\varepsilon^{(3)}$H;

-- Korrelieren des Entscheiderfehlers $\varepsilon^{(3)}$H mit dem grob-rekonstruierten Signal W'H, um einen Phasenfehler zu erzeugen;

-- Filtern des berechneten Phasenfehlers;

-- Speichern des gefilterten Phasenfehlers in einem Speicher (10b), Bereitstellen der ersten Phasenkorrektur $\theta$M an dem Speicherausgang;

- Durchführen einer verfeinerten Hauptsynchronisierung des grob-rekonstruierten Signals W'H mit den Teilschritten:

-- Berechnen einer verfeinerten Phasenkorrektur $\theta$P durch:

--- Empfangen des Signals W'H und Extrahieren aus diesem - in einer mit der Symbolfolge des Signals synchronisierten Art und Weise - der Pilotsymbole,

--- Detektieren eines Phasenfehlers θ'P für jedes Pilotsymbol; und
--- Berechnen einer Phasenkorrektur θP mittels einer Interpolation mit den detektierten Phasenfehlern θ'P;

-- Verzögern (29) des Signals W'H, um es mit der Berechnung der verfeinerten Phasenkorrektur θP auszurichten, wodurch die Interpolationsverzögerung ausgeglichen wird;
-- Anlegen an dem verzögerten Signal W'H der verfeinerten Phasenkorrektur θP, wodurch an dem Ausgang ein präzise rekonstruiertes Signal WH bereitgestellt wird; wobei, wenn eine Synchronisierung erfolgt, die den Empfang und die Extraktion eines Pilotsymbols anzeigt, die gefilterte und gespeicherte auf Grundlage des Entscheider (34) Fehlers berechnete Phasenkorrektur durch den Phasenfehler θ'P, der an dem empfangenen Pilotsymbol gemessen wurde, ersetzt wird, welcher Fehler durch den Phasenregelkreis PLL MAIN als Phasenkorrektur θM ausgegeben wird.

9. Verfahren nach einem der Ansprüche 7 oder 8, wobei die folgenden Operationen in den zweiten und dritten Hauptträger-Synchronisierungsschaltkreisen (MAIN CARRIER SYNC2, MAIN CARRIER SYNC 3) durchgeführt werden:

-- Anlegen einer jeweiligen zweiten/dritten Phasenkorrektur θ+M/θ-M an dem zweiten jeweiligen zweiten/dritten Signal, das einem kreuzpolaren Interferenz-Unterdrückungsversuch unterzogen wird, wodurch ein jeweiliges zweites/drittes grob-rekonstruiertes Signal W'+H/W'-H erzeugt wird;
-- Erzeugen dieser zweiten/dritten Phasenkorrektur θ+M/θ-M mittels eines jeweiligen Phasenregelkreises (PLL MAIN 2; PLL MAIN 3), der an seinem Eingang das jeweilige, grob-rekonstruierte Signal W'+H/W'-H aufnimmt, wobei der Schritt der Erzeugung der Phasenkorrektur umfasst:
-- Erzeugen eines entschiedenen Symbols Ä'+H/Ä'-H, d.h. eines Versuchs zur Schätzung des übertragenen Signals AH, auf Grundlage des grob rekonstruierten Signals W'+AV'-H mittels eines Entscheiders (48);
--- Erzeugen des jeweiligen zweiten/dritten Entscheider-Fehlers $\varepsilon^{(3)+}H/\varepsilon^{(3)-}H$ durch Vergleichen des jeweiligen zweiten/dritten grob-rekonstruierten Signals W'+H/W'-H und des jeweiligen entschiedenen Symbols Ä'+H/Ä'-H;
--- Korrelieren des jeweiligen zweiten/dritten Entscheider-Fehlers $\varepsilon^{(3)+}H/\varepsilon^{(3)-}H$ mit dem jeweiligen zweiten/dritten grob-rekonstruierten Signal W'+H/W'-H, wodurch ein jeweiliger zweiter/dritter Phasenfehler erhalten wird;
-- Filtern des jeweiligen, berechneten zweiten/dritten Phasenfehlers;
--Speichern des gefilterten Phasenfehlers in einem jeweiligen Speicher (56b; 57b), und Erhalten an dem Ausgang des Speichers die jeweilige zweite/dritte Phasenkorrektur θ+M/θ-M;

wobei, wenn eine Synchronisierung erfolgt, die den Empfang und die Extrahierung eines Pilotsymbols anzeigt, die gefilterte und gespeicherte auf dem Entscheider-Fehler berechnete Phasenkorrektur durch den Phasenfehler θ'P ersetzt wird, der an dem empfangenen Pilotsymbol gemessen wird, welcher Fehler als die zweite und dritte Phasenkorrektur θ+M, θ-M ausgegeben wird.

10. Verfahren nach Anspruch 7, 8, oder 9, wobei während der Auswahl Folgendes ausgewählt wird:

- die erste Phasendrehung θX, falls:
MSE- < MSEO < MSE+; oder
- die zweite Phasendrehung θX+β, falls:
MSEO < MSE0+ < MSE-; oder
- die dritte Phasendrehung θX-β, falls:
MSEO < MSE- < MSE+.

11. Verfahren nach einem der Ansprüche 8 bis 10, wobei die zusätzliche Drehung β auf Grundlage eines Entkopplungsgrads (XPD) zwischen den beiden Polarisierungen und/oder eines mittleren quadratischen Entscheider-Fehlers (MSE$_{FLOOR}$), der von Störungen stammt, die nicht mit der kreuzpolaren Interferenz korrelieren, und/oder der verwendeten Modulation eingestellt wird.

**Revendications**

1. Appareil pour traiter un premier signal (Y$_H$) reçu sur une branche de réception associée à une première polarisation et un second signal (Y$_V$) reçu sur une branche associée à une seconde polarisation orthogonale à la première polarisation, destiné à un système de réception, de démodulation et de reconstruction d'une paire de signaux (AH, AV) modulés et transmis de manière isofréquentielle et avec une polarisation orthogonale sur une liaison radio et comprenant des symboles pilotes dans leur séquence de symboles de modulation,
l'appareil comprenant :

- un circuit XPIC CARRIER SYNC de suppression d'une composante d'interférence de polarisation croisée ($T_V$) du premier signal ($Y_H$) reçu, au moyen du signal ($Y_V$) reçu sur la branche de polarisation orthogonale, ledit circuit XPIC CARRIER SYNC comprenant :

-- un premier rotateur de phase (21) qui transmet une rotation de phase $\theta X$ au second signal ($Y_V$),

-- un premier additionneur (2) qui additionne le premier signal ($Y_H$) au second signal ($Y_V$) ayant fait l'objet d'une rotation de $\theta X$ par le premier rotateur (21), obtenant un premier signal soumis à une tentative de suppression d'interférence de polarisation croisée ;

-- un deuxième rotateur de phase (38) qui transmet une seconde rotation de phase $\theta X - \beta$ au second signal ($Y_V$),

-- un deuxième additionneur (37) qui additionne le premier signal ($Y_H$) au second signal ($Y_V$) ayant fait l'objet d'une rotation de $\theta X + \beta$ par le deuxième rotateur (38), obtenant un deuxième signal soumis à une tentative de suppression d'interférence de polarisation croisée ;

-- un troisième rotateur de phase (40) qui transmet une troisième rotation de phase $\theta X - \beta$ au second signal ($Y_V$),

-- un troisième additionneur (39) qui additionne le premier signal ($Y_H$) au second signal ($Y_V$) ayant fait l'objet d'une rotation de $\theta X - \beta$ par le troisième rotateur (40), obtenant un troisième signal soumis à une tentative de suppression d'interférence de polarisation croisée ;

-- dans lequel $\beta$ est une rotation de phase additionnelle ;

-- une boucle à mouillage de phase PLL XPIC qui fournit, en sortie, ladite première rotation de phase $\theta X$ destinée à la première tentative de suppression d'interférence de polarisation croisée, comprenant :

--- un rotateur (11 ; 8) qui communique une contre-rotation à une première erreur de décision $\varepsilon^{(3)}H$ émise par un premier circuit de synchronisation de porteuse principale (MAIN CARRIER SYNC1), appliquant une rotation égale à l'inverse d'une première correction de phase $\theta M$ ;

--- un détecteur (23) d'erreur de phase qui reçoit, en entrée, la première erreur de décision ayant fait l'objet d'une contre-rotation $\varepsilon'H$ obtenue et qui calcule une estimation de l'erreur de phase de la première suppression d'interférence de polarisation croisée réalisée ;

--- un filtre [destiné à] pour filtrer l'erreur de phase estimée calculée et un accumulateur (24), disposé en série avec le détecteur (23), en sortie de l'accumulateur là où est produite la première rotation de phase $\theta X$ destinée à la première tentative de suppression d'interférence de polarisation croisée ;

- un premier circuit de synchronisation de porteuse principale (MAIN CARRIER SYNC1) qui reçoit, en entrée, le premier signal soumis à une tentative de suppression d'interférence de polarisation croisée, qui lui applique la première correction de phase $\theta M$ et qui produit, en sortie, un signal WH reconstruit avec précision et ladite première erreur de décision $\varepsilon^{(3)}H$ ;

- un circuit de décision (5) qui reçoit, en entrée, le signal reconstruit WH et qui émet un signal décidé définitif ÂH ;

- un deuxième circuit de synchronisation de porteuse principale (MAIN CARRIER SYNC2) qui reçoit, en entrée, le deuxième signal soumis à une tentative de suppression d'interférence de polarisation croisée, qui lui applique une deuxième correction de phase $\theta + M$ et qui produit, en sortie, une deuxième erreur de décision $\varepsilon^{(3)}+H$ ;

- un troisième circuit de synchronisation de porteuse principale (MAIN CARRIER SYNC3) qui reçoit, en entrée, le troisième signal soumis à une tentative de suppression d'interférence de polarisation croisée, qui lui applique une troisième correction de phase $\theta - M$ et qui produit, en sortie, une troisième erreur de décision $\varepsilon^{(3)}-H$ ;

- un dispositif de commande qui effectue la sélection de la première rotation de phase $\theta X$ à transmettre au premier signal par le premier rotateur (21), et qui comprend :

-- trois blocs (58, 59, 60) destinés à calculer une erreur quadratique moyenne, c'est-à-dire MSE (pour *Mean Squared Error*), ($MSE_0$, MSE+, MSE-) calculée respectivement sur des première, deuxième et troisième erreurs de décision ($\varepsilon^{(3)}H$, $\varepsilon^{(3)}+H$, $\varepsilon^{(3)}-H$) émises respectivement par les premier, deuxième et troisième circuits de synchronisation de porteuse principale ;

-- un sélecteur (61) qui comprend un comparateur de MSE rapide pouvant comparer les trois MSE calculées ($MSE_0$ ; MSE+ ; MSE-) et émettre, sur la base de ladite comparaison, une sélection de la correction de phase ($\theta X(n+1)$) à transmettre pour la première tentative de suppression d'interférence de polarisation croisée (21, 2).

**2.** Appareil de traitement selon la revendication 1, dans lequel le premier circuit de synchronisation de porteuse principale (MAIN CARRIER SYNC1) comprend :

- un rotateur de phase (33) qui effectue une première synchronisation de phase principale grossière par une application de la première correction de phase θM au premier signal soumis à une tentative de suppression d'interférence de polarisation croisée et qui fournit, au niveau de sa sortie, un premier signal grossièrement reconstruit W'H ;
- une boucle à verrouillage de phase (PLL MAIN) qui reçoit, en entrée, ledit signal grossièrement reconstruit W'H et qui fournit, en sortie, ladite première correction de phase θM, comprenant :

-- un circuit de décision (34) qui, sur la base du signal grossièrement reconstruit W'H, produit un symbole décidé Â'H, c'est-à-dire une tentative d'estimation du signal transmis AH ;
-- un soustracteur (36, 36) qui compare le signal grossièrement reconstruit W'H et le symbole décidé Â'H, fournissant, en sortie, la première erreur de décision $\varepsilon^{(3)}$H (34) ;
-- un détecteur de phase (9) qui met en corrélation l'erreur $\varepsilon^{(3)}$H de décision avec le signal grossièrement reconstruit W'H, fournissant, en sortie, une erreur de phase ;
-- un filtre à boucle (10a) qui reçoit, en entrée, l'erreur de phase calculée par le détecteur de phase (9) et qui la filtre ;
-- un accumulateur (10b) de l'erreur de phase filtrée, qui est conçu pour fournir, en sortie, la première correction de phase θM ;
- un circuit de synchronisation principale affinée (29, 4, 30, 31, 32) qui reçoit, en entrée, le signal grossièrement reconstruit W'H et qui comprend :

-- un dispositif (30, 31, 32) destiné à calculer une correction de phase affinée θP qui :

--- reçoit, en entrée, le signal W'H et qui extrait de ce dernier, d'une manière synchronisée avec la séquence de symboles des signaux, les symboles pilotes,
--- détecte une erreur de phase θ'P de chaque symbole pilote ; et
--- calcule une correction de phase θP au moyen d'une interpolation avec les erreurs de phase θ'P détectées ;

-- un circuit à retard (29) qui reçoit, en entrée, le signal W'H et qui l'aligne avec le dispositif pour calculer une correction de phase affinée θP, compensant le retard d'interpolation ;
-- un rotateur (4) qui applique au signal retardé W'H la correction de phase θP fournie par le dispositif (30, 31, 32) pour calculer une correction de phase affinée θP, fournissant, au niveau de sa sortie, un signal précisément reconstruit WH ;

dans lequel ledit accumulateur (10b) de la boucle à verrouillage de phase (PLL MAIN) comprend un commutateur qui, lors de l'apparition d'un synchronisme indiquant la réception et l'extraction d'un symbole pilote, remplace la correction de phase calculée de l'erreur de décision (34), filtrée et accumulée, avec l'erreur de phase θ'P mesurée sur le symbole pilote reçu, laquelle erreur est délivrée en sortie par la boucle à verrouillage de phase (PLL MAIN) en tant que première correction de phase θM.

**3.** Appareil selon l'une quelconque des revendications précédentes, dans lequel les deuxième et troisième circuits de synchronisation de porteuse principale (MAIN CARRIER SYNC2 ; MAIN CARRIER SYNC3) comprennent chacun :

-- un rotateur (46) qui applique une deuxième/troisième correction de phase respective θ+M/θ-M au deuxième/troisième signal respectif soumis à une tentative de suppression d'interférence de polarisation croisée, et qui fournit, au niveau de sa sortie, un deuxième/troisième signal grossièrement reconstruit respectif W'+H/W'-H ;
-- une boucle à verrouillage de phase (PLL MAIN 2 ; PLL MAIN 3) qui reçoit, en entrée, le signal grossièrement reconstruit respectif W'+H/W'-H et qui fournit, en sortie, ladite deuxième/troisième correction de phase θ+M/θ-M, comprenant :

--- un circuit de décision (48) qui, sur la base du signal grossièrement reconstruit W'+H/W'-H, produit un symbole décidé Â'+H/Â'-H, qui est une tentative d'estimation du signal transmis AH ;
--- un soustracteur (49, 50) qui compare le deuxième/troisième signal grossièrement reconstruit respectif W'+H/W'-H et le symbole décidé respectif Â'+H/Â'-H, fournissant, en sortie, la deuxième/troisième erreur respective $\varepsilon^{(3)+}$W/$\varepsilon^{(3)-}$H de circuit de décision ;

--- un détecteur de phase (54) qui met en corrélation la deuxième/troisième erreur de décision respective $\varepsilon^{(3)+}H/\varepsilon^{(3)-}H$ avec le deuxième/troisième signal grossièrement reconstruit respectif W'+H/W'-H, obtenant, en sortie, une deuxième/troisième erreur de phase respective ;

-- un filtre à boucle (56a) qui reçoit, en entrée, et filtre la deuxième/troisième erreur de phase respective calculée par le détecteur de phase (54) ;

-- un accumulateur (56b) de l'erreur de phase filtrée, qui est conçu pour fournir, en sortie, la deuxième/troisième correction de phase respective $\theta$+M/$\theta$-M ;

dans lequel les accumulateurs (56b, 57b) des deuxième et troisième circuits de synchronisation principale (MAIN CARRIER SYNC2 ; MAIN CARRIER SYNC3) comprennent chacun un commutateur respectif qui, lors de l'apparition d'un synchronisme indiquant la réception et l'extraction d'un symbole pilote, remplace la correction de phase calculée, filtrée et accumulée avec l'erreur de phase $\theta$'P mesurée sur le symbole pilote reçu, qui est délivrée en sortie en tant que deuxième et troisième corrections de phase $\theta$+M, $\theta$-M.

4. Appareil selon la revendication 1, 2 ou 3, dans lequel le sélecteur (61) sélectionne :

- la première rotation de phase $\theta$X si :
MSE- < MSEO < MSE+ ; ou
- la deuxième rotation de phase $\theta$X+$\beta$ si :
MSEO < MSE0+ < MSE- ; ou
- la troisième rotation de phase $\theta$X-$\beta$ si :
MSEO < MSEO- < MSE+.

5. Appareil selon l'une quelconque des revendications 1 à 4, dans lequel la rotation additionnelle $\beta$ est définie sur la base d'un degré de découplage (XPD) entre les deux polarisations, et/ou d'une erreur de décision quadratique moyenne (MSE$_{FLOOR}$) ayant pour origine des perturbations non mises en corrélation avec l'interférence par polarisation croisée, et/ou de la modulation utilisée.

6. Système de réception, de démodulation et de reconstruction de paires de signaux (AH, AV) modulés et transmis de manière isofréquentielle et à polarisation orthogonale sur une liaison radio et comprenant des symboles pilotes dans leur séquence de symboles de modulation, comprenant :

- un appareil selon l'une quelconque des revendications 1 à 5 ;
- un filtre égaliseur transversal TDE qui est situé en amont du premier dispositif de suppression et qui reçoit, en entrée, un signal ($X_H$) reçu sur la branche associée à ladite première polarisation et qui fournit, en sortie, ledit premier signal ($Y_H$) à traiter ;
- un filtre d'annulation d'interférence XPIC (20) qui est situé en amont du premier rotateur et qui reçoit en entrée, un signal ($X_V$) reçu sur la branche de polarisation orthogonale et qui fournit, en sortie, ledit second signal ($Y_V$) ;

dans lequel les coefficients du filtre XPIC (20) sont mis à jour par une corrélation de l'erreur de décision émise par le premier circuit de synchronisation de porteuse principale et ayant fait l'objet d'une rotation de l'inverse de $\theta$X avec des échantillons du signal ($X_V$) reçus en entrée du filtre XPIC (20) et obtenus à des instants immédiatement avant et après le symbole pour lequel a été calculée l'erreur de décision.

7. Procédé de traitement d'un premier signal ($Y_H$) reçu sur une branche de réception associée à une première polarisation (H) et d'un second signal ($Y_V$) reçu sur une branche associée à une seconde polarisation (V) orthogonale à la première polarisation, destiné à un système de réception, de démodulation et de reconstruction de paires de signaux (AH, AV) modulés et transmis de manière isofréquentielle et avec une polarisation orthogonale sur une liaison radio et comprenant des symboles pilotes dans leur séquence de symboles de modulation, le procédé comprenant les étapes consistant à :

- supprimer (XPIC CARRIER SYNC) une composante d'interférence de polarisation croisée ($T_V$) du premier signal ($Y_H$) reçu, au moyen du signal ($Y_V$) reçu sur la branche de polarisation orthogonale, ladite étape de suppression consistant à :

-- transmettre une première rotation de phase $\theta$X au second signal ($Y_V$) au moyen d'un premier rotateur de phase (21),

-- additionner, dans un premier additionneur (2), le premier signal ($Y_H$) au second signal ($Y_V$) ayant fait l'objet d'une rotation de $\theta X$ par le premier rotateur (21), obtenant un premier signal soumis à une tentativede suppression d'interférence de polarisation croisée ;

-- transmettre une deuxième rotation de phase $\theta X-\beta$ au second signal ($Y_V$), au moyen d'un deuxième rotateur de phase (38),

-- additionner, dans un deuxième additionneur (37), le premier signal ($Y_H$) au second signal ($Y_V$) ayant fait l'objet d'une rotation de $\theta X+\beta$ par le deuxième rotateur (38), obtenant un deuxième signal soumis à une tentative de suppression d'interférence de polarisation croisée ;

-- transmettre une troisième rotation de phase $\theta X-\beta$ au second signal ($Y_V$), au moyen d'un troisième rotateur de phase (40),

-- additionner, dans un troisième additionneur (39), le premier signal ($Y_H$) au second signal ($Y_V$) ayant fait l'objet d'une rotation de $\theta X-\beta$ par le troisième rotateur (40), obtenant un troisième signal soumis à une tentative de suppression d'interférence de polarisation croisée ;

-- dans lequel $\beta$ est une rotation de phase additionnelle ;

-- fournir ladite première rotation de phase $\theta X$ destinée à la première tentative de suppression d'interférence de polarisation croisée au moyen d'une boucle à verrouillage de phase PLL XPIC, comprenant les sous-étapes suivantes consistant à :

--- communiquer une contre-rotation à une première erreur de décision $\varepsilon^{(3)}H$ émise par un premier circuit de synchronisation de porteuse principale (MAIN CARRIER SYNC1), au moyen d'un rotateur (11 ; 8), en appliquant, à la première erreur $\varepsilon^{(3)}H$, d'une rotation égale à l'inverse d'une première correction de phase $\theta M$ ;

--- calculer une estimation de l'erreur de phase de la première suppression d'interférence de polarisation croisée exécutée au moyen d'un premier détecteur de phase (23) qui reçoit, au niveau de son entrée, la première erreur de décision obtenue ayant fait l'objet d'une contre-rotation $\varepsilon'H$ de circuit ;

--- filtrer l'erreur de phase estimée calculée et l'accumuler dans un accumulateur (24), en sortie de l'accumulateur là où est produite la première rotation de phase $\theta X$ destinée à la première tentative de suppression d'interférence de polarisation croisée ;

- envoyer le premier signal soumis à une tentative de suppression d'interférence de polarisation croisée à un premier circuit de synchronisation de porteuse principale (MAIN CARRIER SYNC1) qui lui applique la première correction de phase $\theta M$, et qui produit en sortie, un signal WH reconstruit avec précision et ladite première erreur de décision $\varepsilon^{(3)}H$ ;

- envoyer le signal précisément reconstruit WH à un circuit de décision (5) qui émet un signal décidé définitif ÂH ;

- envoyer le deuxième signal soumis à une tentative de suppression d'interférence de polarisation croisée à un deuxième circuit de synchronisation de porteuse principale (MAIN CARRIER SYNC2) qui lui applique une deuxième correction de phase $\theta+M$ et qui produit, en sortie, une deuxième erreur $\varepsilon^{(3)}+H$ de décision ;

- envoyer le troisième signal soumis à une tentative de suppression d'interférence de polarisation croisée à un troisième circuit de synchronisation de porteuse principale (MAIN CARRIER SYNC3) qui lui applique une troisième correction de phase $\theta-M$ et qui produit, en sortie, une troisième erreur $\varepsilon^{(3)}-H$ de décision ;

- effectuer une sélection de la première rotation de phase $\theta X$ à transmettre au premier signal par le premier rotateur (21) par le biais :

-- d'un calcul d'une erreur quadratique moyenne, c'est-à-dire MSE, ($MSE_0$, MSE+, MSE-) respectivement des première, deuxième et troisième erreurs de décision ($\varepsilon^{(3)}H$, $\varepsilon^{(3)}+H$, $\varepsilon^{(3)}-H$) émises respectivement par les premier, deuxième et troisième circuits de synchronisation de porteuse principale ;

-- d'une sélection (61) de la correction de phase ($\theta X(n+1)$) à appliquer pendant la première tentative de suppression d'interférence de polarisation croisée (21, 2) sur la base d'une comparaison des trois MSE calculées ($MSE_0$ ; MSE+ ; MSE-).

8. Procédé de traitement selon la revendication précédente, dans lequel, dans le premier circuit de synchronisation de porteuse principale (MAIN CARRIER SYNC1), les opérations suivantes sont effectuées :

- une première synchronisation principale grossière de phase, en appliquant la première correction de phase $\theta M$ au premier signal soumis à une tentative de suppression d'interférence de polarisation croisée au moyen d'un premier rotateur de phase (33) et par une fourniture, en sortie, un premier signal grossièrement reconstruit W'H ;

- une fourniture de ladite première correction de phase $\theta M$, au moyen d'une boucle à verrouillage de phase (PLL MAIN) qui reçoit, au niveau de son entrée, ledit signal grossièrement reconstruit W'H, comprenant les étapes consistant à :

-- produire un symbole décidé Â'H, c'est-à-dire une tentative d'estimation du signal transmis AH, sur la base du signal grossièrement reconstruit W'H, au moyen d'un circuit de décision (34) ;
-- comparer le signal grossièrement reconstruit W'H et le symbole décidé Â'H, fournissant la première erreur de décision $\varepsilon^{(3)}$H (34) ;
-- mettre en corrélation l'erreur $\varepsilon^{(3)}$H de circuit de décision avec le signal grossièrement reconstruit W'H, de façon à produire une erreur de phase ;
-- filtrer l'erreur de phase calculée ;
-- accumuler, dans un accumulateur (10b), l'erreur de phase filtrée, fournissant, au niveau de la sortie d'accumulateur, la première correction de phase $\theta$M ;
- effectuer une synchronisation principale affinée du signal grossièrement reconstruit W'H, au moyen des sous-étapes consistant à :

-- calculer une correction de phase affinée $\theta$P en :

--- réceptionnant du signal W'H et extractant de ce dernier, d'une manière synchronisée avec la séquence de symboles du signal, des symboles pilotes,
--- détectant une erreur de phase $\theta$'P de chaque symbole pilote ; et
--- calculant une correction de phase $\theta$P au moyen d'une interpolation avec les erreurs de phase $\theta$'P détectées ;

-- retarder (29) le signal W'H de façon à l'aligner avec le calcul de la correction de phase affinée $\theta$P, compensant le retard d'interpolation ;
-- appliquer au signal retardé W'H la correction de phase affinée $\theta$P, fournissant, au niveau de la sortie, un signal précisément reconstruit WH ;

dans lequel, lors de l'apparition d'un synchronisme indiquant la réception et l'extraction d'un symbole pilote, la correction de phase calculée de l'erreur du circuit de décision (34), filtrée et accumulée, est remplacée par l'erreur de phase $\theta$'P mesurée sur le symbole pilote reçu, laquelle erreur est délivrée de sortie par la boucle à verrouillage de phase (PLL MAIN) en tant que correction de phase $\theta$M.

**9.** Procédé selon l'une ou l'autre des revendications 7 et 8, dans lequel les opérations suivantes sont effectuées dans les deuxième et troisième circuits de synchronisation de porteuse principale (MAIN CARRIER SYNC2 ; MAIN CARRIER SYNC3) :

-- appliquer une deuxième/troisième correction de phase $\theta$+M/$\theta$-M au deuxième/troisième signal respectif soumis à une tentative de suppression d'interférence de polarisation, produisant un deuxième/troisième signal grossièrement reconstruit respectif W'+H/W'-H ;
-- produire ladite deuxième/troisième correction de phase $\theta$+M/$\theta$-M au moyen d'une boucle à verrouillage de phase respective (PLL MAIN 2 ; PLL MAIN 3) qui reçoit en son entrée, le signal grossièrement reconstruit respectif W'+H/W'-H, l'étape de production de la correction de phase consistant à :

--- produire un symbole décidé Â'+H/Â'-H, c'est-à-dire une tentative d'estimation du signal transmis AH, sur la base du signal grossièrement reconstruit W'+H/W'-H au moyen d'un circuit de décision (48) ;
--- produire la deuxième/troisième erreur de décision respective $\varepsilon^{(3)+}$H/$\varepsilon^{(3)-}$H, par une comparaison du deuxième/troisième signal grossièrement reconstruit respectif W'+H/W'-H et du symbole décidé respectif Â'+H/Â'-H ;
--- mettre en corrélation la deuxième/troisième erreur de décision respective $\varepsilon^{(3)+}$H/$\varepsilon^{(3)-}$H avec le deuxième/troisième signal grossièrement reconstruit respectif W'+H/W'-H, obtenant une deuxième/troisième erreur de phase respective ;

-- filtrer la deuxième/troisième erreur de phase respective calculée ;
-- accumuler, dans un accumulateur respectif (56b ; 57b), l'erreur de phase filtrée, et obtenir, en sortie de l'accumulateur, la deuxième/troisième correction de phase respective $\theta$+M/$\theta$-M ;

dans lequel, lors de l'apparition d'un synchronisme indiquant la réception et l'extraction d'un symbole pilote, la correction de phase calculée de l'erreur de circuit de décision, filtrée et accumulée est remplacée par l'erreur de phase θ'P mesurée sur le symbole pilote reçu, laquelle erreur est délivrée en tant que deuxième et troisième corrections de phase θ+M, θ-M.

10. Procédé selon la revendication 7, 8 ou 9, dans lequel, pendant l'étape de sélection, [la rotation de phase suivante] est sélectionnée :

- la première rotation de phase θX si :
MSE- < MSEO < MSE+ ; ou
- la deuxième rotation de phase θX+β si :
MSEO < MSE0+ < MSE- ; ou
- la troisième rotation de phase θX-β si :
MSEO < MSE- < MSE+.

11. Procédé selon l'une quelconque des revendications 8 à 10, dans lequel la rotation additionnelle β est définie sur la base d'un degré de découplage (XPD) entre les deux polarisations, et/ ou d'une erreur quadratique moyenne de décision ($MSE_{FLOOR}$) ayant pour origine des perturbations non corrélées avec l'interférence de polarisation croisée, et/ou de la modulation utilisée.

Fig. 1

Fig. 2

*Fig. 3*

*Fig. 4*

*Fig. 5*

*Fig. 6*

Fig. 7

Fig. 8

*Fig. 9*

*Fig. 10*

*Fig. 11*

*Fig. 12*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007057911 A